# EUROPEAN PATENT APPLICATION

(11) **EP 2 602 748 A1**
(43) Date of publication of application: **12.06.2013**
(21) Application number: 12185291.7
(22) Date of filing: 20.09.2012
(51) Int. Cl.: G06N 3/00, G06Q 10/00

(54) **Methods, apparatuses, and computer-readable media for providing at least one availability metaphor of at least one real world entity in a virtual world**

(30) Priority: 01.12.2011 US 201113308702
(71) Applicant: Avaya Inc., Basking Ridge, NJ 07920-2311 (US)
(72) Inventor: Edholm, Philip, Pleasanton, CA 94588 (US)
(74) Representative: Williams, David John

(57) **Abstract**

Methods, apparatuses, and computer-readable media for providing at least one availability metaphor of at least one real world entity in a virtual world are disclosed. In one embodiment, a request to provide a virtual world model comprising at least one availability metaphor may be received. For each at least one availability metaphor, an availability state of a real world entity associated with the availability metaphor may be determined. A modified instance of the virtual world model comprised of the at least one availability metaphor may be generated based on the determined at least one availability state of the at least one real world entity associated with the at least one availability metaphor. Each availability metaphor of the modified instance of the virtual world model may represent the availability state of the associated real world entity. The modified instance of the virtual world model may be transmitted for rendering.

## Description

### CROSS-REFERENCE TO RELATED APPLICATION

This application is related to U.S Patent Application Serial Number 13/308,835, filed on December 1, 2011 and entitled "METHODS, APPARATUSES, AND COMPUTER-READABLE MEDIA FOR PROVIDING AVAILABILITY METAPHOR(S) REPRESENTING COMMUNICATIONS AVAILABILITY IN AN INTERACTIVE MAP," which is hereby incorporated herein by reference in its entirety.

### BACKGROUND

### Field of the Disclosure

The technology of the disclosure relates to communications involving real world entities in a virtual world.

### Thechnical Background

A virtual world allows two or more persons who are not physically present in a same location in the real world to communicate and collaborate. Furthermore, a virtual world provides opportunities for unplanned or random encounters among individuals. The unplanned communication and collaboration resulting from such unplanned or random encounters may be productive and/or beneficial. Such encounters, communication, and collaboration among the same individuals in the real world may be unlikely, for example due to the different physical locations, physical distance, and social groups among those individuals in the real world. The utility of a virtual world may increase as the number of individuals concurrently logged into the virtual world increases.

However, the increased opportunities for communication and collaboration may also have its costs. Interruptions during certain activities and/or times may be undesirable and/or unproductive. Interruptions from certain individuals and/or groups may also be undesirable and/or unproductive. One approach for limiting undesired and/or unproductive interruptions is for an individual to leave (for example, log out of) the virtual world. However, once logged out, the individual is no longer available for virtual world collaborations that the individual may have found beneficial and/or productive.

Furthermore, it may be difficult to know when an individual will be receptive to being contacted. One may overestimate or underestimate another individual's willingness to communicate at any given time.

### SUMMARY OF THE DETAILED DESCRIPTION

Embodiments disclosed in the detailed description include methods, apparatuses, and computer-readable media for providing at least one availability metaphor of at least one real world entity in a virtual world. In one embodiment, a request to provide a virtual world model is received. The virtual world model comprises at least one availability metaphor representing at least one availability state of at least one real world entity. For each at least one availability metaphor, an availability state of a real world entity associated with the availability metaphor is determined. A modified instance of the virtual world model is generated based on the determined at least one availability state of the at least one real world entity associated with the at least one availability metaphor. The modified instance of the virtual world model is comprised of the at least one availability metaphor. Each at least one availability metaphor of the modified instance of the virtual world model represents the availability state of the associated real world entity. The modified instance of the virtual world model is transmitted for rendering. As a non-limiting example, the method may be executed by a virtual world server. As a further non-limiting example, the modified instance of the virtual world model may be transmitted for rendering to a virtual world participant device.

In another embodiment, an apparatus for providing at least one availability metaphor of at least one real world entity in a virtual world is disclosed. The apparatus comprises a communications interface adapted to interface with a network. The apparatus further comprises a control system coupled to the communications interface. The control system is configured to receive a request to provide a virtual world model. The virtual world model comprises at least one availability metaphor representing at least one availability state of at least one real world entity. The control system is further configured to determine, for each at least one availability metaphor, an availability state of a real world entity associated with the availability metaphor. The control system is further configured to generate a modified instance of the virtual world model based on the determined at least one availability state of the at least one real world entity associated with the at least one availability metaphor. The modified instance of the virtual world model comprises the at least one availability metaphor. Each at least one availability metaphor of the modified instance of the virtual world model represents the availability state of the associated real world entity. The control system is further configured to transmit the modified instance of the virtual world model for rendering. As a non-limiting example, the apparatus may be a virtual world server for providing at least one virtual world model. As a further non-limiting example, the modified instance of the virtual world model may be transmitted for rendering to a virtual world participant device.

In another embodiment, a computer-readable medium is disclosed. The computer-readable medium has stored thereon computer executable instructions to cause an electronic device to implement a method for providing at least one availability metaphor of at least one real world entity in a virtual world. The computer executable instructions include receiving a request to provide a virtual world model. The virtual world model comprises at least one availability metaphor representing at least one availability state of at least one real world entity. The computer executable instructions further include determining, for each at least one availability metaphor, an availability state of a real world entity associated with the availability metaphor. The computer executable instructions further include generating a modified instance of the virtual world model based on the determined at least one availability state of the at least one real world entity associated with the at least one availability metaphor. The modified instance of the virtual world model comprises the at least one availability metaphor. Each at least one availability metaphor represents the availability state of the associated real world entity. The computer executable instructions further include transmitting the modified instance of the virtual world model for rendering. As a non-limiting example, the computer-readable instructions may be computer readable instructions for a virtual world server. As a further non-limiting example, the computer-readable instructions may include transmitting the modified instance of the virtual world model for rendering to a virtual world participant device.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

The accompanying drawing figures incorporated in and forming a part of this specification illustrate several aspects of the disclosure, and together with the description serve to explain the principles of the disclosure.

Figure 1A illustrates an avatar view of a rendered virtual world model comprising at least one availability metaphor;

Figure 1B illustrates an avatar view of a rendered virtual world model comprising at least one availability metaphor;

Figure 1C illustrates an avatar view of a rendered virtual world model comprising at least one availability metaphor;

Figure 1D illustrates an avatar view of a rendered virtual world model comprising at least one availability metaphor;

Figure 2 is an exemplary flowchart illustrating an exemplary method for providing at least one availability metaphor of at least one real world entity in a virtual world;

Figure 3 is a block diagram illustrating a system in which embodiments disclosed herein may be practiced;

Figure 4 is a block diagram illustrating various exemplary real world entity sensors;

Figure 5 illustrates an exemplary message flow for determining an availability state (e.g., a presence state) of a real world entity;

Figure 6 illustrates an exemplary message flow for determining an availability state (e.g., an interruptibility state) of a real world entity;

Figures 7A through 7D illustrate an exemplary message flow for providing at least one availability metaphor of at least one real world entity in a virtual world;

Figure 8A illustrates an avatar view of a rendered virtual world model comprising at least one availability metaphor;

Figure 8B illustrates a real world view, including a real world display of the avatar of Figure 8A looking into the office of a real world entity;

Figure 9A illustrates an avatar view of a rendered virtual world model, including at least one image of a real world entity on a virtual world display;

Figure 9B illustrates a real world view, including a real world display of an avatar viewing Figure 9A and at least one image of a second real world entity corresponding with that avatar;

Figure 10A illustrates an avatar view of a rendered virtual world model, the virtual world model comprising a cubicle representing a real world cubicle;

Figure 10B illustrates a real world view of a cubicle, including apparatuses for interacting with one or more avatars viewing the corresponding virtual cubicle;

Figure 11A illustrates an avatar view of a rendered virtual world model, the virtual world model comprising at least one availability metaphor for the availability of a real world conference room;

Figure 11B illustrates a real world view of the conference room, including apparatuses for interacting with one or more avatars viewing the corresponding virtual conference room;

Figure 12A illustrates an avatar view of a rendered virtual world model, the virtual world model comprising a virtual conference room representing the real world conference room of Figure 11B;

Figure 12B illustrates a real world view of the conference room represented by Figure 12A;

Figure 13A illustrates an avatar view of a rendered virtual world model, the virtual world model comprising a virtual building representing a real world building;

Figure 13B illustrates a real world view of the real world building which is represented by the virtual world model of Figure 13A;

Figure 14 illustrates an embodiment of an exemplary data structure with which embodiments disclosed herein may be practiced;

Figure 15 illustrates an embodiment of an exemplary availability rule set (e.g., an interruptibility rule set);

Figure 16 illustrates an exemplary device for capturing three-dimensional models of real world locations;

Figure 17 illustrates an exemplary rendered exterior view of an exemplary virtual world model which may be generated using the exemplary device of Figure 16;

Figure 18 illustrates an exemplary rendered interior view of the exemplary virtual world model of Figure 17 which may be generated using the exemplary device of Figure 16; and

Figure 19 is a schematic diagram representation of an exemplary device in the system of Figure 3, for implementing a virtual world server, an availability server, a virtual world participant device, a calendar server, an occupant device and/or an occupant sensor, and configured to execute instructions from an exemplary computer-readable medium to perform the functions described herein.

### DETAILED DESCRIPTION

With reference now to the drawing figures, several exemplary embodiments of the present disclosure are described. The word "exemplary" is used herein to mean "serving as an example, instance, or illustration." Any embodiment described herein as "exemplary" is not necessarily to be construed as preferred or advantageous over other embodiments.

Embodiments disclosed in the detailed description include methods, apparatuses, and computer-readable media for providing at least one availability metaphor of at least one real world entity in a virtual world. In one embodiment, a request to provide a virtual world model is received. The virtual world model comprises at least one availability metaphor representing at least one availability state of at least one real world entity. For each at least one availability metaphor, an availability state of a real world entity associated with the availability metaphor is determined. A modified instance of the virtual world model is generated based on the determined at least one availability state of the at least one real world entity associated with the at least one availability metaphor. The modified instance of the virtual world model is comprised of the at least one availability metaphor. Each at least one availability metaphor of the modified instance of the virtual world model represents the availability state of the associated real world entity. The modified instance of the virtual world model is transmitted for rendering. As a non-limiting example, the method may be executed by a virtual world server. This method may allow participants of a virtual world to more accurately perceive the availability of one or more real world entities (for example, by reducing overestimates and/or underestimates of the availability of the one or more real world entities).

A position of a real world door (e.g., open or closed) may not be a significant indicator of a person's actual availability. A real world door of a real world office may be closed because a hall is noisy or may become noisy. A real world door may be closed to avoid disturbing others on the hall with conversations or other sounds from the office. A real world door may be closed to increase the privacy of conversations in the office. A real world door may be closed to prevent odors from emanating into or from the office. A real world door may be closed to maintain an increased or decreased humidity or temperature in an office. A real world door may be open as a matter of office convention or policy. Accordingly, a real world door may be open or closed for any of a variety of reasons which do not indicate a person's actual availability. However, whether a person's real world door is open or closed may significantly affect the perceived interruptibility that one or more viewers of the real world door will perceive for the occupant of an office.

Whether an office's occupant may be seen through a window of the office may also not be a significant indicator of a person's actual availability. Though a person is present in the office, the person may or may not wish to be disturbed. Furthermore, though a person is not present in the office, the person may or may not be available. As non-limiting examples, the person may be in a nearby room or office, in a meeting, or traveling. When present or away from the office, the person may or may not be remotely contactable (for example, by phone). However, whether a person is or is not viewable through a real world window may significantly affect the perceived availability (e.g., presence and/or interruptibility) that one or more viewers of the real world window will perceive for the occupant of an office.

Accordingly, one or more viewers of a real world door and/or real world window of a real world office may incorrectly perceive (e.g., underestimate or overestimate) the availability (for example, interruptibility and/or presence) of the real world office's occupant. In this regard, in some instances, a viewer of a real world door and/or real world window may perceive that a person is available when the person is not available, or more available when the person is less available. In other instances, a viewer may incorrectly perceive that a person is not available when the person is available, or less available when the person is more available.

Furthermore, persons not physically present in an office may not be able to perceive a real world door and/or real world window of an office.

Furthermore, different viewers of a real world door and/or real world window of an office may observe a same position of a real world door and/or real world window, regardless of whether the office's occupant is more or less available (e.g., interruptible) to one of the different viewers than another of the different viewers.

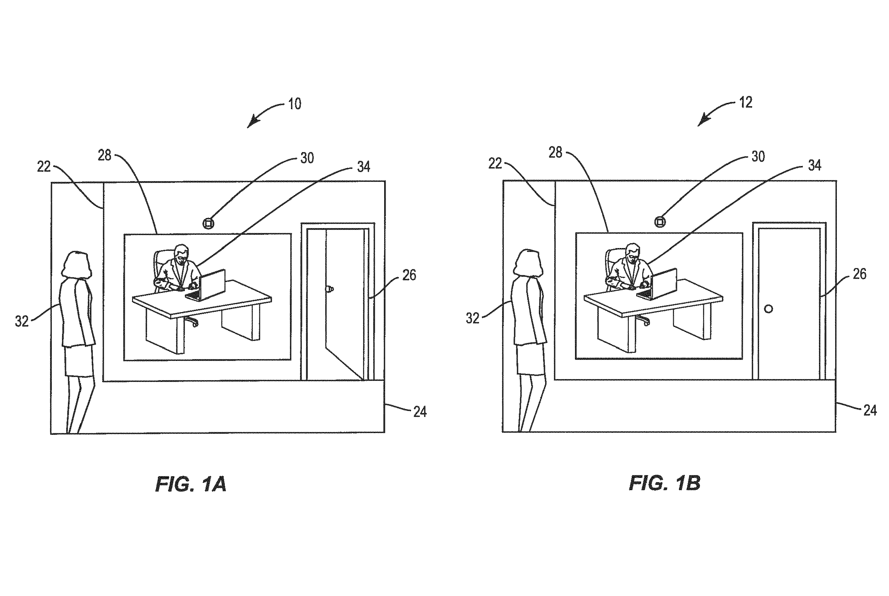

Referring now to Figures 1A-1D, and as now discussed in further detail, a virtual world model may comprise at least one availability metaphor. An availability metaphor comprises one or more objects in a virtual world representing the availability of a real world entity to viewers of the virtual world. In one embodiment, the at least one availability metaphor may comprise an interruptibility metaphor. An interruptibility metaphor comprises one or more objects in a virtual world representing the interruptibility of a real world entity to viewers of the virtual world. In another embodiment, the at least one availability metaphor may comprise a presence metaphor. A presence metaphor comprises one or more objects in a virtual world representing the presence of a real world entity to viewers of the virtual world. Availability metaphors (e.g., interruptibility metaphors and/or presence metaphors) may represent the availability (e.g., interruptibility and/or presence) of a real world entity based on one or more availability rules. Providing virtual world rules controlling the availability state represented by one or more availability metaphors (e.g., interruptibility metaphor and/or presence metaphor) may provide a greater accuracy for communicating availability (for example, interruptibility and/or presence) information to viewers of the one or more availability metaphors.

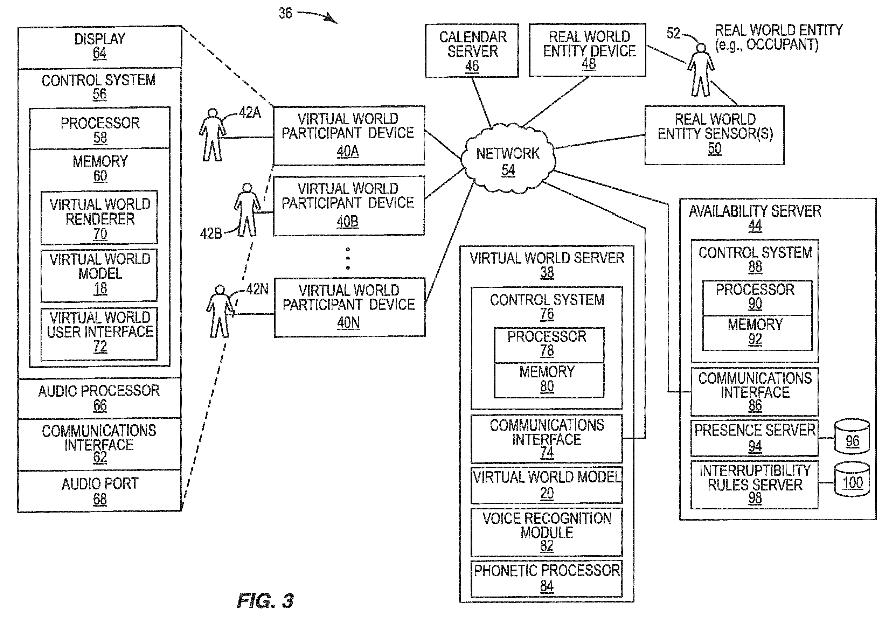

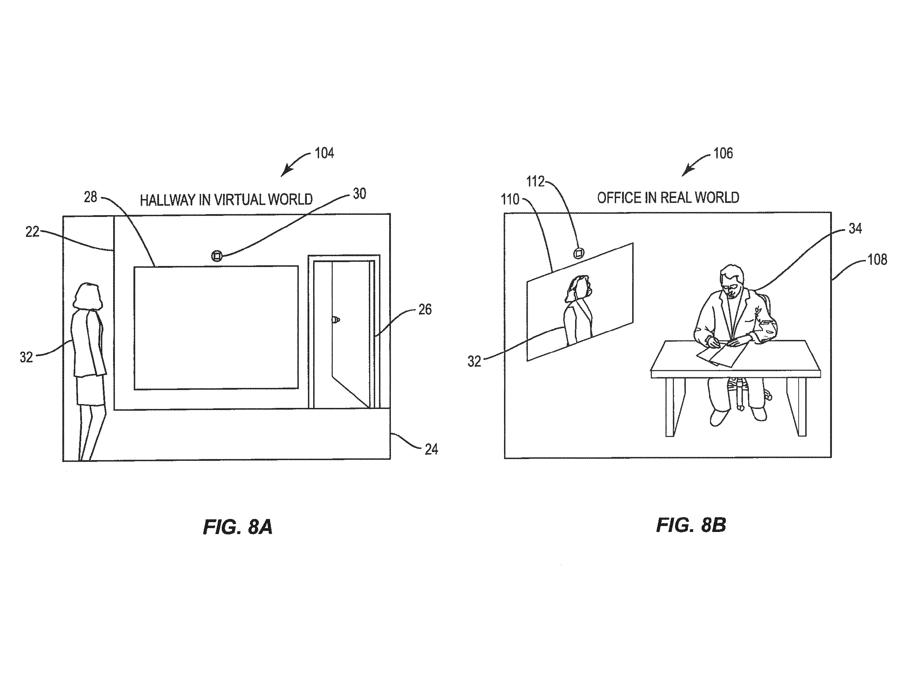

Figures 1A through 1D depict rendered views 10, 12, 14, and 16 of a virtual world model 18 (Figure 3). In Figures 1A through 1D, a virtual world model 18 is comprised of a virtual office 22, a virtual hallway 24, a virtual door 26, a virtual window 28, a virtual camera 30, and a viewing avatar 32. Virtual office 22 represents a real world office 108 (Figure 8B) occupied by a real world entity 34.

The rendered virtual world model 18 depicted in views 10, 12, 14, and 16 of Figures 1A through 1D is comprised of at least one availability metaphor of a real world entity 34. As depicted in Figures 1A through 1D, the at least one availability metaphor of the virtual world model 18 may comprise a virtual door 26 representing the interruptibility of the real world entity 34. As also depicted in Figures 1A through 1D, the at least one availability metaphor of the virtual world model 18 may comprise a virtual window 28 representing a presence of the real world entity 34. (Virtual door 26 may also be referred to as a virtual world door 26. Virtual window 28 may also be referred to as a virtual world window 28).

Virtual door 26 may be an interruptibility metaphor for real world entity 34. If real world entity 34 is not interruptible, virtual door 26 may be provided within a modified instance of virtual world model 20 (e.g., virtual world model 18) as a closed door. If real world entity 34 is interruptible, virtual door 26 may be provided within a modified instance of virtual world model 20 (Figure 3) (e.g., virtual world model 18) as an open door. (Virtual world model 18 may be a copy of or modified instance of a virtual world model 20). Other interruptibility states of real world entity 34 are also representable by virtual door 26. As one non-limiting example, a virtual door 26 which is slightly open may represent that real world entity 34 is interruptible for high priority matters but not interruptible for low priority matters.

Other characteristics of virtual door 26 may also be used to provide an availability metaphor and/or interruptibility metaphor for real world entity 34. As non-limiting examples, other such characteristics of a virtual door 26 that maybe used include a color of the virtual door 26 among a plurality of colors, a darker or lighter color of the virtual door 26, an increased or decreased transparency of the virtual door 26, an absence or presence of the virtual door 26, a greater or lesser size of the virtual door 26, a greater or lesser thickness of the virtual door 26, an open position or closed position of a window through the virtual door 26, a texture of the virtual door 26 (e.g., a stone texture, a wooden texture, or a gel texture).

In this regard, in one embodiment the color of the virtual door 26 may be any of an ordered rainbow of colors. A first color (e.g., red) may indicate no interruptibility. A second color (e.g., violet) may indicate interruptibility. Intermediate colors (e.g., orange, yellow, green, blue, indigo) may indicate intermediate levels of interruptibility, with colors closer to the first color (e.g., red) among the plurality of colors representing less interruptibility and with colors closer to the second color (e.g., violet) among the plurality of colors representing greater interruptibility. Alternative color palette orderings could also be used.

In another embodiment, the virtual door 26 may have any among a plurality of color intensities. A darkest color intensity of the virtual door 26 among a plurality of color intensities may indicate no interruptibility. A lightest color intensity of the virtual door 26 among the plurality of color intensities may indicate interruptibility. Intermediate color intensities of the virtual door 26 may indicate intermediate levels of interruptibility.

In another embodiment, the virtual door 26 may have an increased or decreased transparency. An opaqueness (e.g., a least transparency among a plurality of transparencies) of the virtual door 26 may indicate no interruptibility, whereas a greatest transparency (among a plurality of transparencies) of the virtual door 26 may indicate interruptibility. Intermediate transparencies of virtual door 26 may indicate intermediate levels of interruptibility.

In another embodiment, an absence or presence of the virtual door 26 may indicate interruptibility. In this regard, as a non-limiting example, a present virtual door 26 may indicate no interruptibility, whereas an absent virtual door 26 may indicate interruptibility.

In another embodiment, a greater or lesser size of the virtual door 26 may indicate interruptibility. In this regard, as a non-limiting example, a smallest door size among a plurality of door sizes for virtual door 26 may indicate no interruptibility, whereas a greatest door size among a plurality of door sizes for virtual door 26 may indicate interruptibility. Intermediate door sizes of virtual door 26 may indicate intermediate levels of interruptibility.

In another embodiment, a greater or lesser thickness of a virtual door 26 may represent interruptibility. In this regard, as a non-limiting example, a greatest thickness among a plurality of thickness of the virtual door 26 may represent no interruptibility whereas a least thickness among a plurality of thickness of the virtual door 26 may represent interruptibility. Intermediate thicknesses of virtual door 26 may represent intermediate levels of interruptibility.

In another embodiment, the virtual door 26 may comprise a window through at least a portion of the virtual door 26, the window through the virtual door 26 representing interruptibility. A closed window of the virtual door 26 may indicate no interruptibility, whereas a completely open window of the virtual door 26 may indicate interruptibility. Intermediate positions of the window of the virtual door 26 may represent intermediate levels of interruptibility.

In another embodiment, virtual door 26 may have a texture representing interruptibility. In this regard, as a non-limiting example, a stone texture of virtual door 26 may indicate no interruptibility, whereas a gel texture of the virtual door 26 may indicate interruptibility. Intermediate textures (e.g., brick, wooden, plastic, foam) of virtual door 26 could represent intermediate levels of interruptibility.

An advantage of using a virtual door 26 to indicate an interruptibility state of a real world entity 34 is that the virtual door 26 provides an intuitive metaphor for communicating the interruptibility state of a real world entity 34. Providing virtual world rules controlling the interruptibility state represented by a virtual door 26 may provide a greater accuracy for communicating interruptibility information than a real world door. Though a real world door being closed may have no significant relationship with a person's actual interruptibility, a real world door being closed may have a significant effect on the perceived interruptibility that viewers of the real world door will perceive for the real world entity 34. Embodiments in accordance with this disclosure may allow a real world entity 34 to provide an interruptibility rule set consistent or more consistent with the actual availability of the real world entity 34. As such, embodiments in accordance with this disclosure may allow a viewer of the virtual door 26 to perceive interruptibility of the real world entity 34 associated with the door with an increased correlation and/or accuracy to the actual interruptibility of the real world entity 34 associated with the virtual door 26.

Any of the herein discussed embodiments may be used alone or in any combination as an availability metaphor to represent the availability and/or interruptibility of a real world entity 34.

The at least one availability metaphor of a virtual world model 18 may comprise a virtual window representing a presence of the real world entity in the real world. In this regard, referring again to Figures 1A through 1D, a virtual window 28 may be a presence metaphor for real world entity 34. In other words at least one characteristic of the virtual window 28 may represent a presence of a real world entity 34 in the real world.

In one embodiment, if real world entity 34 is present (as a non-limiting example, present within at least one defined area of the real world as detected by one or more real world entity sensors 50 depicted in Figure 3) then virtual window 28 may be provided within a modified instance of virtual world model 20 (e.g., virtual world model 18) as a transparent window. Alternatively, if real world entity 34 is present, then virtual window 28 may be provided within a modified instance of virtual world model 20 (e.g., virtual world model 18) as an open window.

If real world entity 34 is not present (as a non-limiting example, not present within at least one defined area of the real world as detected by one or more real world entity sensors 50) then virtual window 28 may be provided within a modified instance of virtual world model 20 (e.g., virtual world model 18) as a nontransparent window. Alternatively, if real world entity 34 is not present, then virtual window 28 may be provided within a modified instance of virtual world model 20 (e.g., virtual world model 18) as a closed window.

In a further embodiment, at least one image of the real world entity 34 may be provided in the virtual world model 18 as viewable through the virtual window 28 if real world entity 34 is present. In this embodiment, the at least one image of the real world entity 34 is not provided in the virtual world model 18 as viewable through the virtual window 28 if real world entity 34 is not present.

Other characteristics of the virtual window 28 may also be used to represent the availability of the real world entity 34. As non-limiting examples, other such characteristics of a virtual window 28 that may be used to represent the presence of a real world entity 34 include a color of the virtual window 28 among a plurality of colors, a darker or lighter color of the virtual window 28, an increased or decreased transparency of the virtual window 28, an absence or presence of the virtual window 28, a greater or lesser size of the virtual window 28, a greater or lesser thickness of the virtual window 28, an open position or closed position of the virtual window 28, a texture of the virtual window 28 (e.g., a stone texture, a wooden texture, or a gel texture). A first such characteristic among any of the above discussed characteristics may represent the presence of a real world entity 34. A second such characteristic among any of the above discussed characteristics may represent that real world entity 34 is not present. Intermediate characteristics between the first and second characteristic may represent intermediate levels of the presence of real world entity 34. In this regard, as a non-limiting example, a first intermediate represented level of presence may represent that the real world entity 34 is present on a device and reachable via text messaging, but not reachable for audio or video communication. By way of a further non-limiting example, a second intermediate represented level of presence (e.g. having a greater represented level of presence than the first level of presence) may represent that the real world entity 34 is present on a device or at a location with audio communications capability, but without a video communications capability.

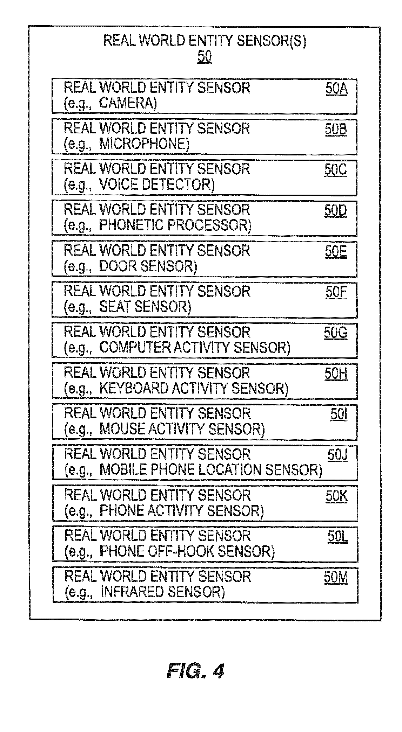

Figures 1A through 1D provide an exemplary embodiment in which a virtual door 26 is an availability metaphor representing an interruptibility of a real world entity 34 and a virtual window 28 is an availability metaphor representing a presence of a real world entity 34. In this embodiment, an open state of the virtual door 26 represents that real world entity 34 is interruptible. Also in this embodiment, a closed state of the virtual door 26 represents that real world entity 34 is not interruptible. In this embodiment, a display of at least one image of real world entity 34 in the real world in or through the virtual window 28 represents that real world entity 34 is present in an office of the real world entity 34. As a non-limiting example, the display of the at least one image of real world entity 34 may be an image periodically captured from a camera 50A (Figure 4) in the real world office of the real world entity 34.

In accordance with these embodiments, Figure 1A depicts a presence metaphor (virtual window 28) representing that a real world entity 34 is present in an office of the real world entity 34. Figure 1A also depicts an interruptibility metaphor (virtual door 26) representing that a real world entity 34 is interruptible. Accordingly, viewing avatar 32 may enter virtual office 22 to initiate communications with real world entity 34.

Figure 1B depicts a presence metaphor (virtual window 28) representing that a real world entity 34 is present in the office of the real world entity 34. Though real world entity 34 is present in the office, Figure 1B also depicts an interruptibility metaphor (virtual door 26) representing that real world entity 34 is not interruptible. Accordingly, viewing avatar 32 may determine to not enter virtual office 22 to initiate communications with real world entity 34. In one embodiment, viewing avatar 32 may be denied entrance of virtual office 22 by the virtual world model 18, preventing a communications attempt with real world entity 34.

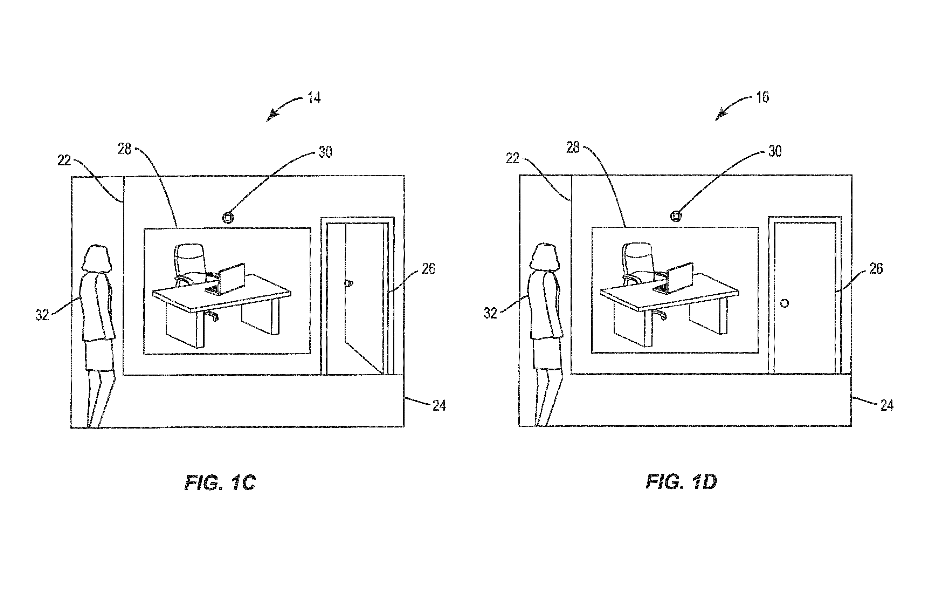

Figure 1C depicts a presence metaphor (virtual window 28) representing that a real world entity 34 is not present in the office of the real world entity 34. Though not present in the office, Figure 1C also depicts an interruptibility metaphor (virtual door 26) representing that real world entity 34 is interruptible. Accordingly, viewing avatar 32 may enter the virtual office 22 to initiate communications with real world entity 34.

Figure 1D depicts a presence metaphor (virtual window 28) representing that a real world entity 34 is not present in the office of the real world entity 34. Figure 1D also depicts an interruptibility metaphor (virtual door 26) representing that real world entity 34 is not interruptible. Accordingly, viewing avatar 32 may determine to not enter virtual office 22 to attempt to initiate communications with real world entity 34. In one embodiment, viewing avatar 32 may be denied entrance of virtual office 22 by the virtual world model 18, preventing a communications attempt with real world entity 34.

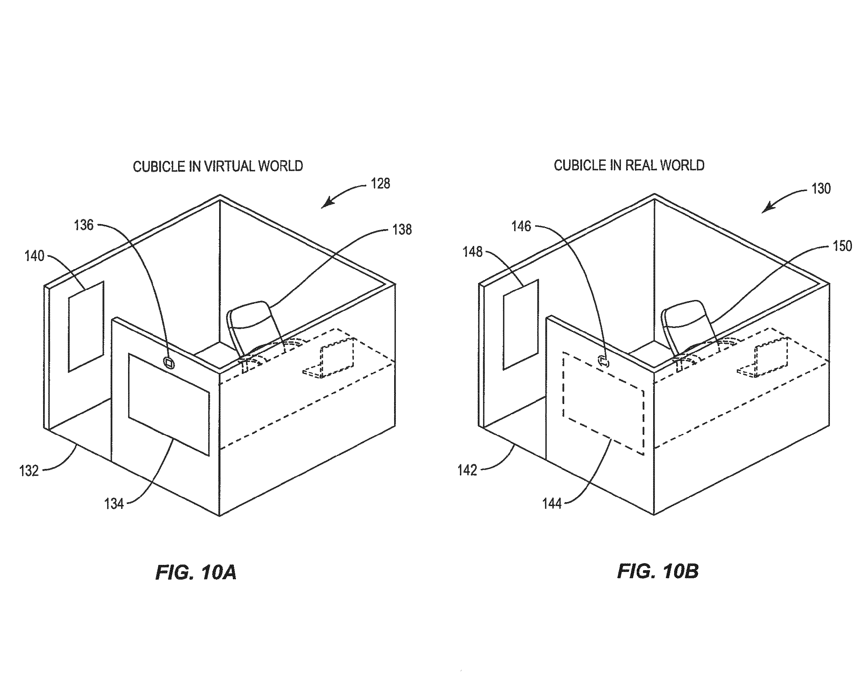

In certain embodiments, an image captured from a real world camera 50A (Figure 4) (as non-limiting examples, a real world camera 112 (Figure 8B) or a real world camera 146 (Figure 10B)) in the real world office of the real world entity 34 for displaying in or through the virtual window 28 may be captured at 10 second intervals, 20 second intervals, 30 second intervals, 1 minute intervals, 2 minute intervals, or 5 minute intervals. Other time intervals may also be used. Providing such periodic still images may allow a real world entity 34 to perceive a greater sense of privacy than providing camera video from the real world camera 50A in or through the virtual window 28. This may allow certain embodiments disclosed herein to more easily achieve user acceptance from one or more real world entities 34. However, camera video from the real world camera 50A of the real world entity 34 may also be provided in or through virtual window 28.

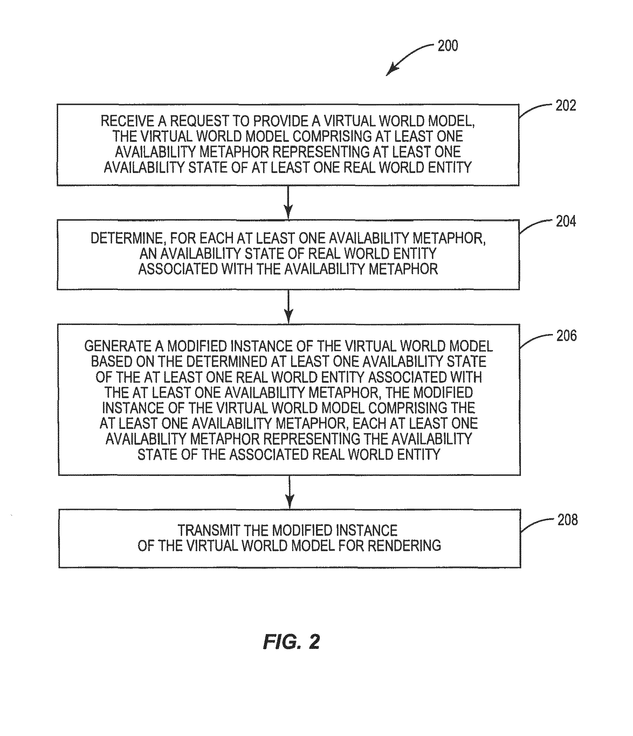

Figure 2 depicts an exemplary method 200 for providing at least one availability metaphor of at least one real world entity in a virtual world. Method 200 comprises receiving a request to provide a virtual world model, the virtual world model comprising at least one availability metaphor representing at least one availability state of at least one real world entity (step 202). Method 200 further comprises determining, for each at least one availability metaphor, an availability state of a real world entity associated with the availability metaphor (step 204). Method 200 further comprises generating a modified instance of the virtual world model based on the determined at least one availability state of the at least one real world entity associated with the at least one availability metaphor, the modified instance of the virtual world model comprising the at least one availability metaphor, each at least one availability metaphor representing the availability state of the associated real world entity (step 206). Method 200 further comprises transmitting the modified instance of the virtual world model for rendering (step 208).

Method 200 may comprise additional steps. As a non-limiting example, method 200 may further comprise rendering for display the modified instance of the virtual world model. As another non-limiting example, method 200 may further comprise displaying the rendered modified instance of the virtual world model. An availability state of a real world entity 34 may comprise an availability state of the real world entity 34 for communications with at least one viewing entity viewing the rendered virtual world model. As a non-limiting example, an availability metaphor (e.g., virtual door 26) transmitted to virtual world participant device 40A (Figure 3) associated with a virtual world participant 42A may represent an availability of a real world entity 34 for communication with virtual world participant 42A (Figure 3). In this manner, the state of the availability metaphor (e.g., virtual door 26) may be based, in part, upon the viewer viewing the availability metaphor. In this regard, availability rules may condition which availability state is provided for display in an availability metaphor based upon who is viewing the availability metaphor.

In this regard, different virtual world participants 42 (as a non-limiting example, a first virtual world participant 42A and a second virtual world participant 42B) may each concurrently view different availability metaphor states for a same real world entity 52. This may occur because the real world entity 52 provided to virtual world server 38 availability rules (as non-limiting examples, interruptibility rules and/or presence rules) conditioned on which specific virtual world participant 42 (or which type of virtual world participant 42) is viewing the availability metaphor for the real world entity 52. As a non-limiting example, a first virtual world participant device 42A may render a first virtual world model 18A comprising an availability metaphor for a certain real world entity 52. A second virtual world participant device 42B may concurrently render a second virtual world model 18B comprising the availability metaphor for the same real world entity 52. However, the availability state (as non-limiting examples, presence state and/or interruptibility state) represented by the rendered availability metaphor on the first virtual world participant device 42A for the first virtual world participant 42A may be different from the availability state represented by the rendered availability metaphor on the second virtual world participant device 42B for the second virtual world participant device 42B.

As a non-limiting example, an interruptibility metaphor rendered for the first virtual world participant 42A may display a virtual door as open (representing the real world entity 52 as interruptible), whereas the availability metaphor rendered for the second virtual world participant 42B may concurrently display a same virtual door as closed (representing the real world entity 52 as not interruptible).

As a further non-limiting example, a presence metaphor rendered for a first virtual world participant 42A may display an image of a certain real world entity 52 (representing that real world entity 52 as present), whereas a presence metaphor rendered for a second virtual world participant 42B may concurrently display an image not depicting the real world entity 52 (representing that real world entity 52 as not present).

In this regard, method 200 may further comprise receiving an identity of a viewing entity for whom the virtual world is to be rendered. Method 200 may also further comprise determining the availability of the real world entity based on the identity of the viewing entity. In addition, different viewers (e.g., different viewing avatars) may be concurrently provided virtual world models 18A, 18B presenting different availability states for a same availability metaphor (e.g., a same virtual door or a same virtual window). As used herein, the term "concurrently" is defined as "at least partially overlapping in time." In other words, different viewers (e.g., different viewing avatars) may be presented, during a same time interval, different availability states for a same availability metaphor (e.g., a same virtual door or a same virtual window).

In this regard, method 200 may further comprise receiving a second request to provide the virtual world model for a second viewing entity. Method 200 may further comprise determining a second availability state of the real world entity based on the identity of the second viewing entity. Method 200 may further comprise generating a second modified instance of the virtual world model based on the second availability state. Method 200 may further comprise transmitting the second modified instance of the virtual world model for rendering for the second viewing entity. In this regard, the modified instance of the virtual world model and the second modified instance of the virtual world model are for concurrent rendering. Further, the modified instance of the virtual world model may provide the real world entity as available and the second modified instance of the virtual world model provides the real world entity as not available.

Determining the availability state of a real world entity may comprise determining a presence of the real world entity in a defined area in the real world. Alternatively, determining the availability state of the real world entity may comprise determining a presence of the real world entity on a device in the real world. In this regard, determining a presence of the real world entity on a device in the real world may comprise determining whether the real world entity is logged into a device and/or using the device).

Determining the availability state of the real world entity may comprise determining an interruptibility of the real world entity in the real world. Determining the interruptibility of the real world entity may comprise determining the interruptibility of the real world entity based on at least one interruptibility rule.

Figure 3 is a block diagram illustrating an exemplary system 36 in which embodiments disclosed herein may be practiced. The system 36 includes a plurality of processing devices, such as a virtual world server 38 and a plurality of virtual world participant devices 40A-40N (generally, virtual world participant devices 40 or participant devices 40). The virtual world participant devices 40 are communicatively coupled to the virtual world server 38 and to one another via one or more networks 54. System 36 may further include other processing devices, such as availability server 44, calendar server 46, real world entity device 48, and one or more real world entity sensors 50. Availability server 44, calendar server 46, real world entity device 48, and real world entity sensor(s) 50 are also communicatively coupled to the virtual world server 38, virtual world participant devices 40, and to one another via the one or more networks 54. In one embodiment, real world entity sensors 50 may detect the presence or absence of a real world entity 52.

In one embodiment, virtual world participant device 40 is a device capable of receiving and rendering a virtual world model for a participant 42 as further described below. Virtual world participant device 40 may comprise, for example, a computer; a personal digital assistant (PDA); a mobile phone, such as an Apple® iPhone®, a Google® Android® phone, or the like, as non-limiting examples.

Virtual world server 38 may be any type of virtual world server. As non-limiting examples, virtual world server may comprise an Avaya® web.alive® server and/or a Linden Research, Inc. SecondLife® server. Furthermore, virtual world participant device 40 may comprise any time of virtual world client. As non-limiting examples, virtual world participant device 40 may comprise an Avaya® web.alive® client and/or a Linden Research, Inc. SecondLife® client. Virtual world server 38 may also use any protocol and/or data structure for transmitting a virtual world model 18 to a virtual world participant device 40.

While for purposes of illustration embodiments are described herein in the context of a single virtual world participant device 40, the embodiments are not limited to the use of a single processing device. One or more of the virtual world participants may participate in a virtual world with multiple processing devices. Of course, the virtual world participant device 40 may also comprise a single processing device, such as a computer with a microphone and headset, or a smartphone, such that both the audio aspects and video aspects of the embodiments described herein are handled by a single processing device.

The virtual world participant devices 40 are communicatively coupled to the virtual world server 38 and to one another via one or more networks 54. While only a single network 54 is illustrated in Figure 3, it will be appreciated that communications may travel over multiple networks, such as a private local area network (LAN) in a participant's house, a public access network, an enterprise network, and so on, between the processing devices. The virtual world participant devices 40A-40D may connect to the network 54 via any suitable network access paths, such as, as non-limiting examples, telephony technology, digital subscriber line technology, cable modem technology, cellular technology, Wi-Fi®, Bluetooth®, Ethernet, or the like. Data, such as control signals, audio signals, and the like, as non-limiting examples, are typically carried over a network access path connecting the virtual world participant device to remaining portions of network 54.

An exemplary virtual world participant device 40, such as virtual world participant device 40A, includes a control system 56, which may include a processor 58 and a random access memory (RAM) 60, for controlling overall operation of the virtual world participant device 40A, and for rendering a virtual world model as discussed in greater detail herein.

The virtual world participant device 40 may also include a communications interface 62 that is adapted to communication with the network 54 to facilitate communications between the virtual world participant device 40A and external devices, such as the virtual world server 38. The virtual world participant device 40 also includes, or is coupled to, a display 64 upon which images of a virtual world model 18 may be rendered, and via which, with the aid of an input devices such as a mouse, a keyboard, a touch screen interface, virtual reality gloves, or other input devices it is possible to interact with the virtual world associated with the virtual world model 18. The virtual world participant device 40A also preferably includes a media processor, such as an audio processor 66, which may generate a media stream that includes voice signals of a virtual world participant 42A and sends the media stream to the virtual world server 38 continuously during a virtual world session, or continuously for as long as the virtual world participant device 40A detects that the virtual world participant 42A is speaking. The media stream is typically, although not necessarily, a digitized data stream that is generated by audio processor 66 and represents the voice signals of virtual world participant 42A. Over the course of a virtual world session, the media stream of any particular virtual world participant 42 may be discontinuous, in that the media stream may be generated only when the virtual world participant 42 is actually speaking. As used herein, the phrase "incoming media stream" will refer to a media stream that is sent from a virtual world participant device 40 to the virtual world server 38, and the phrase "outgoing media stream" will refer to a media stream that is sent from the virtual world server 38 to a virtual world participant device 40.

Audio processor 66 may also receive outgoing media streams from the virtual world server 38 and provide the outgoing media streams to an audio port 68 to which an audio device, such as a headset or speakers, may be coupled. Alternatively, if the virtual world participant device 40A is a smartphone, as a non-limiting example, the audio device may be integral with the virtual world participant device 40A.

Virtual world participant device 40 may also include a virtual world renderer 70 for rendering a virtual world model 18. As a non-limiting example, the virtual world renderer 70 may render the virtual world model 18 for display on the display 64 of the virtual world participant device 40. Virtual world participant device 40 may also include a virtual world user interface 72 for allowing an associated virtual world participant 42 to manipulate the virtual world (for example, by manipulating the virtual world model 18, as a non-limiting example).

Each of the virtual world participant devices 40 establishes a virtual world session with the virtual world server 38. The virtual world session may comprise any type of session or connection between a respective virtual world participant device 40 and the virtual world server 38 that enables the transmission of a virtual world model 18 from the virtual world server 38 to the respective virtual world participant device 40, irrespective of the underlying physical infrastructure used to carry the virtual world model 18, or the particular protocol used to establish the communication session between the respective virtual world participant device 40 and the virtual world server 38. As non-limiting examples, suitable protocols may include, for example, Transport Control Protocol (TCP), User Datagram Protocol (UDP), Internet Protocol (IP), and Hypertext Transport Protocol (HTTP), or the like. The embodiments disclosed herein may be provided as an extension of any protocol, signaling, or messaging that may be used for providing a virtual world model 18 to a virtual world participant device 40.

The virtual world model 18 of a virtual world participant device 40 may be a copy (as a non-limiting example, a synchronized copy) of a virtual world model 20 of the virtual world server 38. Alternatively, virtual world model 18 may be a generated based on virtual world model 20 but be different from virtual world model 20, for example, because virtual world model 18 may contain certain portions which are customized and/or specifically generated for the virtual world participant 42, as a non-limiting example.

Virtual world server 38 includes a communications interface 74 that is adapted to communicate with the communication network 54, and can comprise any suitable combination of hardware and/or software necessary for sending a virtual world model 18 to a virtual world participant device 40 and for receiving user interaction information or other input from a virtual world participant 42 using a virtual world user interface 72 to interact with the virtual world model 18.

Virtual world server 38 also includes a control system 76, which may include a processor 78 and a memory 80, for controlling the overall operation of the virtual world server 38. A voice recognition module 82 and/or phonetic processor 84 may enable one or more of the virtual world participants 42 to issue voice commands through their virtual world participant device 40 during a virtual world session with the virtual world server 38. Upon detecting a voice command or component portions of such a command, the voice recognition module 82 and/or phonetic processor 84 may provide the recognized command to the processor 78 of the virtual world server 38 for further processing.

Virtual world server 38 may maintain a virtual world model 20 as a master virtual world model for a virtual world. Virtual world server 38 may serve at least some portions of the virtual world model 20 (for example, a virtual world model 18) to a virtual world participant device 40 as the associated virtual world participant 42 enters regions of the virtual world model 20 corresponding to the at least some portions of the virtual world model 20. A virtual world model 18 provided to a virtual world participant device 40 may contain at least some portions which are common to all virtual world participant devices 40. A virtual world model 18 may also contain at least some portions that are specific for a particular virtual world participant 42.

A virtual world model 18, 20 may comprise at least one availability metaphor for representing at least one availability state of at least one real world entity. As used herein, the term "metaphor" is defined as "an arrangement of virtual objects that represent an idea." In this regard, an availability metaphor provides an arrangement of virtual objects that represent the availability of a real world entity. As a non-limiting example, an availability metaphor may comprise a visual metaphor for representing the availability of at least one real world entity. A "visual metaphor" is defined as "a visual arrangement of virtual objects that represent an idea." Thus, a visual availability metaphor provides a visual arrangement of virtual objects that represent the availability of a real world entity.

In one embodiment, virtual world server 38 may determine the availability state of a real world entity 52 by transmitting a request for availability information for the real world entity 52 to an availability server 44. Availability server 44 may include a communications interface 86 that is adapted to communicate with the network 54 to facilitate communications between the availability server 44 and the virtual world server 38. Availability server 44 may also include a control system 88, which may include a processor 90 and a memory 92, for controlling overall operation of the availability server 44. Availability server 44 may also include a presence server 94 for serving presence information about real world entity 52. As used herein, the term "presence information" is defined as "information indicating whether a real world entity is present at a real world location or on a real world device." Presence information about at least one real world entity 52 may be stored in a presence database 96 associated with the presence server 94. Though illustrated in Figure 3 as integral to the availability server 44, presence database 96 may also be provided remotely to the availability server 44. In one embodiment, presence server 94 serves presence information to virtual world server 38. In another embodiment, presence server 94 may serve presence information directly to one or more virtual world participant devices 40.

Availability server 44 may also include an interruptibility rules server 98 for serving interruptibility rules associated with at least one real world entity 52. As used herein, "interruptibility rules" are "rules for determining an interruptibility of a real world entity." In one embodiment, a real world entity may provide interruptibility rules for determining the interruptibility of the real world entity. Interruptibility rules about at least one real world entity 52 may be stored in at least one interruptibility rules database 100 associated with the interruptibility rules server 98. Though illustrated in Figure 3 as integral to the availability server 44, interruptibility rules database 100 may also be provided remotely to the availability server 44.

System 36 may comprise additional devices for collecting and providing availability information to the availability server 44. In one embodiment, system 36 comprises at least one calendar server 46. Calend server 46 serves calendar information of at least one real world entity 52 to availability server 44. Any protocol for providing calendar information to the availability server 44 may be used. Availability server 44 may use calendar information associated with a real world entity 52 provided from calendar server 46 to the availability server 44 to determine the interruptibility and/or presence of the real world entity 52.

Real world entity sensors 50 may sense sensory information about a real world entity 52 which may be used as inputs for determining the availability of the real world entity 52. In one embodiment, at least one real world entity sensor 50 detects information which may be processed by availability server 44 to determine the presence and/or interruptibility of a real world entity 52.

A real world entity device 48 may be used by a real world entity 52 to provide addressing and/or authorization information to availability server 44. Real world entity 52 may use real world entity device 48 to provide the addressing and/or authorization information to the availability server 44. As a non-limiting example, real world entity device 48 may provide addressing and/or authorization information to availability server 44 for accessing calendar information of the real world entity 52 from the calendar server 46. As a further non-limiting example, real world entity device 48 may provide addressing and/or authorization information to availability server 44 for accessing sensor information from one or more real world entity sensors 50.

Referring now to Figure 4, real world entity sensors 50 may comprise any type of sensor for detecting sensory information which may be used to aid a determination of availability (e.g. a presence and/or interruptibility) of a real world entity 52. As depicted in Figure 4, non-limiting examples of such real world entity sensors 50 include a camera 50A, a microphone 50B, a voice detector 50C, a phonetic processor 50D, a door sensor 50E, a seat sensor 50F, a computer activity sensor 50G, a keyboard activity sensor 50H, a mouse activity sensor 50I, a mobile phone location sensor 50J, a phone activity sensor 50K, a phone off-hook sensor 50L, and an infrared sensor 50M. Further non-limiting examples of such sensors are now discussed. Camera 50A may be positioned to capture at least one image at or near a location that real world entity 52 may visit (such as a room or office of the real world entity 52). Camera 50A may capture at least one still image and/or video. Using the at least one image from the camera 50A, availability server 44 may use motion detection algorithms, face recognition algorithms, and/or other instructions for determining the presence and/or interruptibility of the real world entity 52.

Microphone 50B may be positioned for capturing audio at or near a location that real world entity 52 may visit (such as a room or office of the real world entity). Alternatively, microphone 50B may be positioned on or near a device that real world entity 52 may use. Availability server 44 may use voice detection, or phonetic processing to detect a voice, phonemes, or other sounds associated with a real world entity 52. Voice detector 50C and/or phonetic processor 50D may thus be used to aid in determining the presence and/or interruptibility of a real world entity 52, in this regard. At least one door sensor 50E may be used to detect whether at least one door is open or closed. As a non-limiting example, the at least one door sensor 50E may be used to detect whether an office door of the real world entity 52 or other room which may be habitually occupied by the real world entity 52 is open or closed.

Computer activity sensor 50G may provide information regarding whether a computer of the real world entity 52 is or is not active. As a non-limiting example, computer activity sensor 50G may provide information regarding whether at least one office computer or phone of the real world entity 52 is in use. Keyboard activity sensor 50H may detect whether a keyboard of the real world entity 52 is in use. As a non-limiting example, keyboard activity sensor 50H may detect whether an office keyboard of the real world entity 52 is in use. Alternatively, keyboard activity sensor 50H may detect whether a PDA or smart phone of the real world entity 52 is in use. Mouse activity sensor 50I may detect whether a mouse of the real world entity 52 is in use. As a non-limiting example, mouse activity sensor 50I may detect whether an office mouse of the real world entity 52 is in use. Similar activity sensors may be provided for any other input device of the real world entity 52.

Mobile phone location sensor 50J may detect the location, velocity, and/or acceleration of a mobile phone of the real world entity 52. A similar mobile location sensor may be provided for any other mobile possessions of the real world entity 52. As a non-limiting example, a mobile location sensor may be provided as a part of a key or keychain of the real world entity 52. Phone activity sensor 50K may detect the use of a phone of the real world entity 52. For example in one embodiment, the detection of usage of a phone of real world entity 52 may be used for determining that real world entity 52 is not interruptible (as a non-limiting example, because real world entity 52 is already speaking with someone else). Phone off-hook sensor 50L may also be used for detecting usage of a phone of real world entity 52. Infrared sensor 50M may be used for determining whether a room (e.g. an office) occupied by real world entity 52 is occupied. One of skill in the art will appreciate other sensors that may be used in accordance with this disclosure to aid a determination of the availability (e.g., presence and/or interruptibility) of a real world entity 52.

As may be appreciated by one of skill in the art from the disclosures provided herein, any of the servers, devices, or other components herein disclosed may be provided as a plurality of those servers, devices, or components. Providing a plurality of the servers, devices, or other components may increase the capacity and/or redundancy of those servers, devices, or other components. Certain non-limiting examples are now provided. Virtual world server 38 may be provided as a plurality of virtual world servers 38. Any one virtual world participant device 40A, 40B, and/or 40N may be provided as a plurality of virtual world participant devices 40A, 40B, and/or 40N. Availability server 44 may be provided as a plurality of availability servers 44. Calendar server 46 may be provided as a plurality of calendar servers 46. Real world entity device 48 may be provided as a plurality of real world entity devices 48. Each real world entity sensor 50 may be provided as a plurality of real world entity sensors 50. Presence server 94 may be provided as a plurality of presence servers 94. Interruptibility rules server 98 may be provided as a plurality of interruptibility rules servers 98.

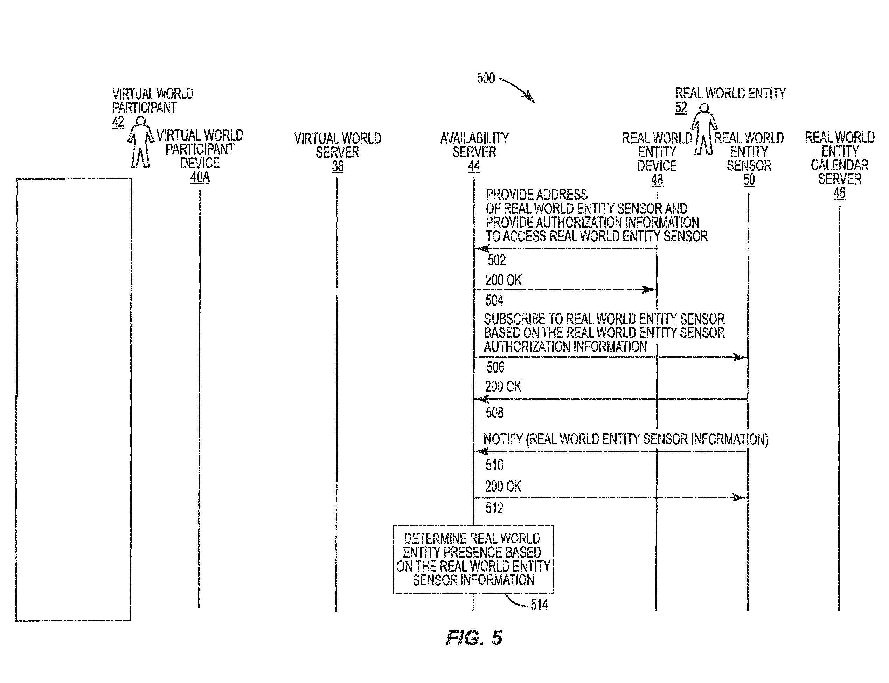

Figure 5 illustrates an exemplary message flow 500 for determining an availability state (e.g., a presence state) of a real world entity 52. In this embodiment, a real world entity device 48 transmits an address of a real world entity sensor 50 along with authorization information for accessing the real world entity sensor 50 to availability server 44 (step 502). The real world entity device 48 may be associated with the real world entity 52. In one embodiment, real world entity 52 may provide the real world entity device 48 the address and/or authorization information for accessing real world entity sensor 50. Availability server 44 may positively acknowledge that transmission (step 504). Availability server 44 may thereafter subscribe to real world entity sensor 50 based on the provided address and/or authorization information for accessing real world entity sensor 50 (step 506). Real world entity sensor 50 may positively acknowledge the subscription (step 508). Thereafter, real world entity sensor 50 may provide at least one notification comprising real world entity sensor information to availability server 44 (step 510). In one embodiment, the notifications may be periodically sent to availability server 44. In another embodiment, the notification may be sent to availability server 44 when at least one detected event occurs. Availability server 44 may positively acknowledge the at least one notification (step 512). Availability server 44 may determine a presence of the real world entity 52 based on the provided real world entity sensor information (step 514).

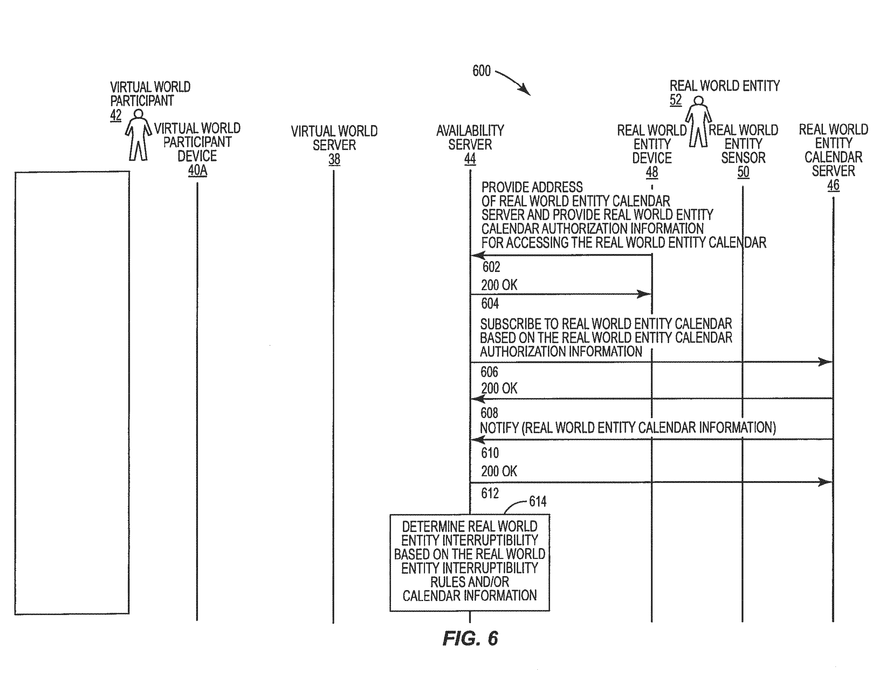

Figure 6 illustrates an exemplary message flow 600 for determining an availability state (e.g., an interruptibility state) of a real world entity 52. In this embodiment, a real world entity device 48 transmits an address of a real world entity calendar server 46 along with authorization information for accessing calendar information of real world entity 52 to availability server 44 (step 602). The real world entity device 48 may be associated with the real world entity 52. In one embodiment, real world entity 52 may provide the real world entity device 48 the address and/or authorization information for accessing calendar information of real world entity 52. Availability server 44 may positively acknowledge the transmission (step 604). Availability server 44 may thereafter subscribe to real world calendar server 46 for real world entity calendar information of real world entity 52 based on the provided calendar server address of the calendar server 46 and/or authorization information for accessing the calendar information of real world entity 52 (step 606). Real world entity calendar server 46 may positively acknowledge the subscription (step 608). Thereafter, real world entity calendar server 46 may provide to availability server 44 at least one notification comprising calendar information for real world entity 52 (step 610). In one embodiment, a first notification provides a complete listing of calendar information of real world entity 52. Thereafter, subsequent notifications may be sent when calendar information of real world entity 52 is changed and/or updated. Availability server 44 may positively acknowledge the at least one notification (step 612). Availability server 44 may determine an interruptibility of real world entity 52 based on the provided calendar information for real world entity 52 and/or other interruptibility rules (step 614).

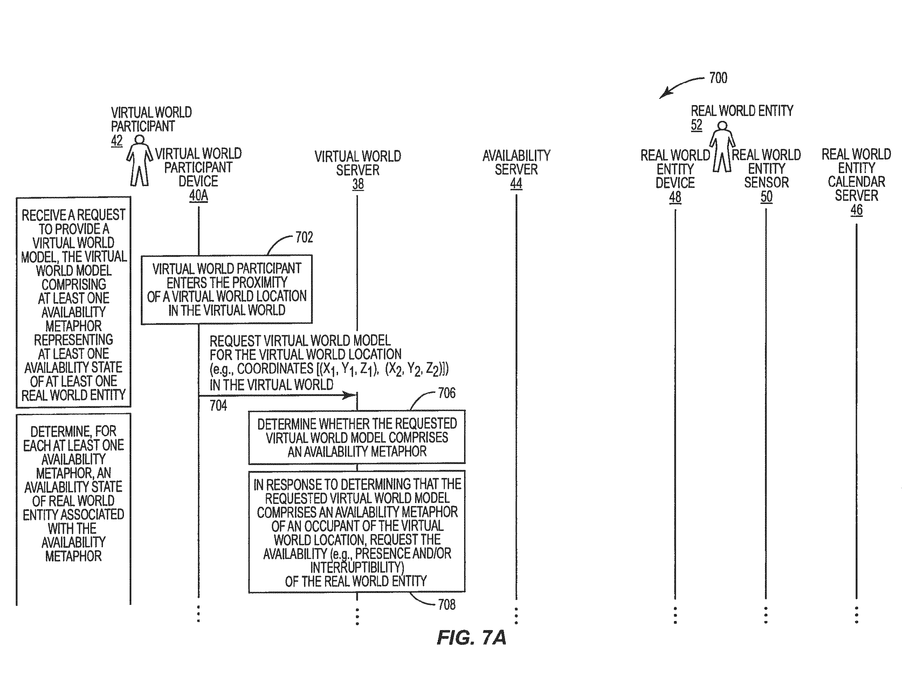

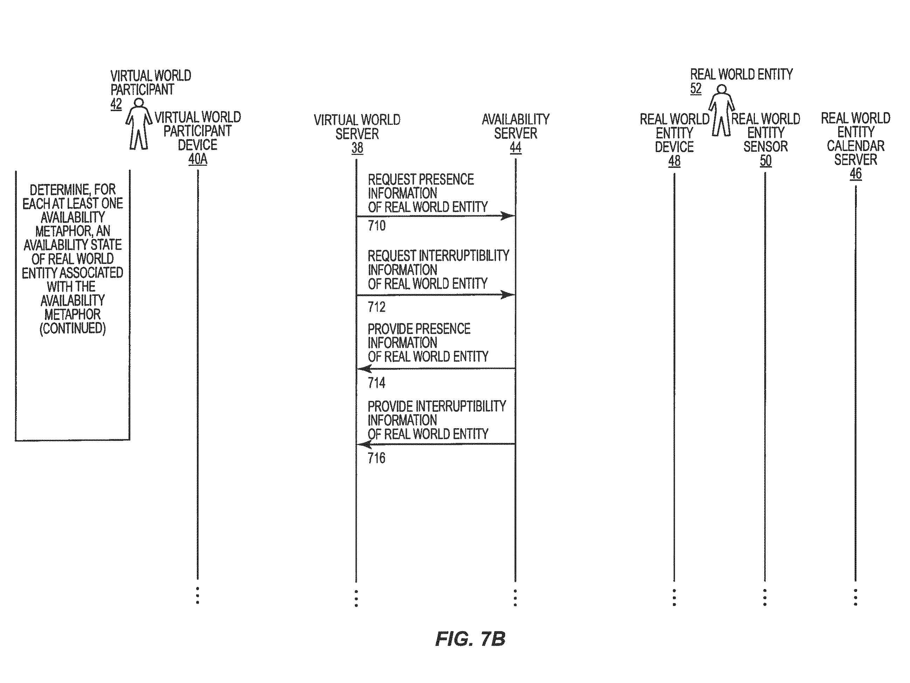

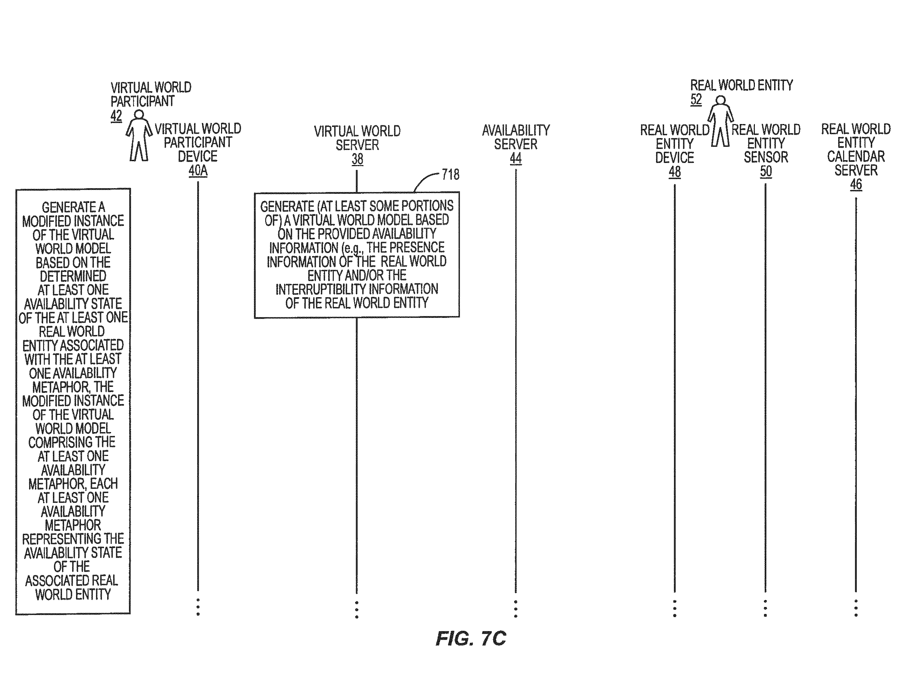

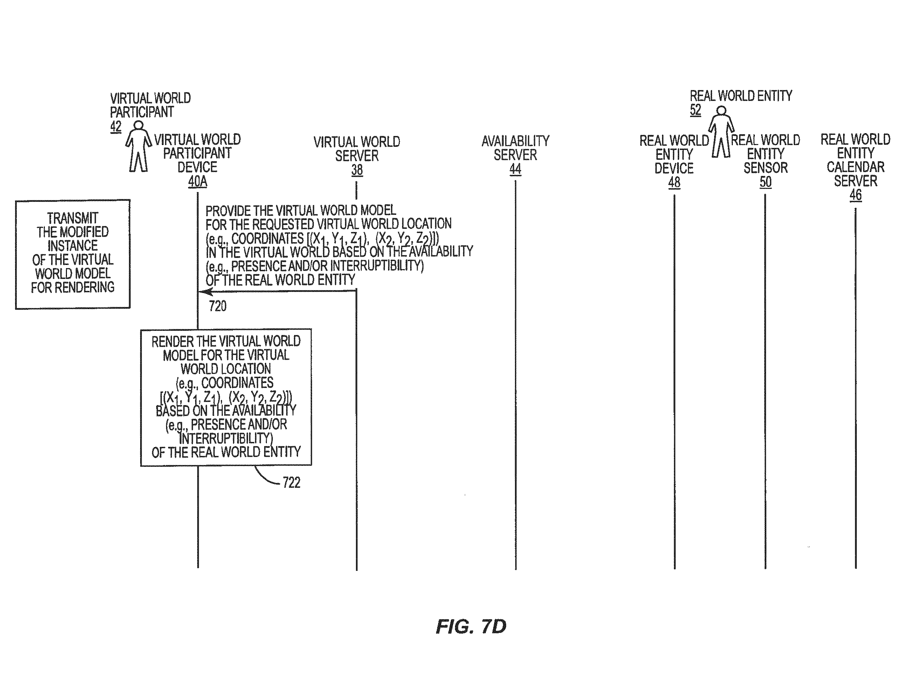

Figures 7A through 7D illustrate an exemplary message flow for providing at least one availability metaphor of at least one real world entity in a virtual world. In this embodiment, a virtual world participant 42 uses a virtual world participant device 40A to enter the proximity of a virtual world location in the virtual world (step 702). As a result, virtual world participant device 40A transmits a request to provide a virtual world model 18, the virtual world model 18 comprising at least one availability metaphor representing at least one availability state of at least one real world entity 52. In one embodiment, virtual world participant device 40A may request a virtual world model 18 for the newly proximate virtual world location in the virtual world, as a non-limiting example, by requesting coordinates of the newly proximate virtual world location (step 704). Upon receiving the request, virtual world server 38 may determine, for each at least one availability metaphor, an availability state of a real world entity 52 associated with the availability metaphor. Virtual world server 38 may determine whether the requested virtual world model 18 comprises an availability metaphor (step 706). In response to determining that the requested virtual world model 18 comprises an availability metaphor of a real world entity 52 of the virtual world location, virtual world server 38 may request the availability (e.g., presence and/or interruptibility) of the real world entity 52 (step 708). In this regard, as a non-limiting example, virtual world server 38 may request presence information of real world entity 52 from availability server 44 (step 710). By way of a further non-limiting example, virtual world server 38 may request interruptibility information of real world entity 52 from availability server 44 (step 712).

Availability server 44 may provide presence information of real world entity 52 to the virtual world server 38 (step 714). Availability server 44 may also provide interruptibility information of real world entity 52 to the virtual world server 38 (step 716). Virtual world server 38 may generate a modified instance of a virtual world model 20 based on the determined at least one availability state of the at least one real world entity associated with the at least one availability metaphor. The modified virtual world instance (e.g. virtual world model 18) of the virtual world model 20 may comprise at least one availability metaphor. Each at least one availability metaphor of the modified virtual world instance (e.g., virtual world model 18) of the virtual world model 20 may represent the availability state of the associated real world entity 52. Accordingly, virtual world server 38 may generate (at least some portions of) a virtual world model 18 (from a virtual world model 20) based on the provided availability information (step 718). The provided availability information may comprise the presence information of real world entity 52 and/or interruptibility information of real world entity 52. Thereafter, virtual world server 38 may transmit the modified virtual world instance (e.g., virtual world model 18) of the virtual world model 20 for rendering. In this regard, virtual world server 38 may provide virtual world model 18 for the requested virtual world location in the virtual world based on the availability of the real world entity 52 (step 720). The availability information may comprise presence information of real world entity 52 and/or interruptibility information of real world entity 52. Thereafter, virtual world participant device 40A may render the virtual world model 18 for the requested virtual world location based on the availability of the real world entity 52 (for example, based on the presence and/or interruptibility of the real world entity 52, as non-limiting examples).

As depicted in Figures 7A through 7D, determining the availability state of a real world entity 52 may comprise transmitting a request for availability information for real world entity 52 to an availability server 44 (steps 710, 712). As also depicted in Figures 7A through 7D, determining the availability state of real world entity 52 may comprise receiving the availability information for real world entity 52 from availability server 44 (steps 714, 716). In one embodiment, the availability information for real world entity 52 received from availability server 44 may comprise availability rules for determining the availability state of real world entity 52. Alternatively, the availability information for real world entity 52 received from availability server 44 may comprise an availability state of real world entity 52 in the real world.

Figure 8A depicts an avatar view 104 of a rendered virtual world model 18 comprising at least one availability metaphor (26, 28). Figure 8A depicts an exemplary embodiment in which a virtual door 26 is an availability metaphor representing an interruptibility of a real world entity 34 and a virtual window 28 is an availability metaphor representing a presence of a real world entity 34. In this embodiment, an open state of the virtual door 26 represents that real world entity 34 is interruptible. Also in this embodiment, a closed state of the virtual door 26 represents that real world entity 34 is not interruptible. In this embodiment, a display of at least one image of real world entity 34 in the real world in or through the virtual window 28 represents that real world entity 34 is present in an office of the real world entity 34. As a non-limiting example, the display of the at least one image of real world entity 34 may be an image periodically captured from a camera in the real world office of the real world entity 34. In this embodiment, virtual window 28 may show no image of real world entity 34 (for example, be opaque or blank, as non-limiting examples) if real world entity 34 is not reported as present in real world office 108.

Real world entity 34 may be an occupant of a defined area in the real world. An "occupant" of a defined area in the real world is a real world entity (for example, a person, as a non-limiting example) to whom a defined area in the real world has been assigned, for example through ownership, tenancy, or other assignment, as non-limiting examples. As a non-limiting example, an occupant may be a person (or group) that occupies or has quarters or space in or on something. Virtual world model 18 may comprise at least one virtual world parcel representing the defined area in the real world. A virtual world "parcel" is a defined area in the virtual world.

In this regard, Figure 8B depicts a defined area 106 in the real world (here, a real world office 108 of real world entity 34). Virtual office 22 (Figure 8A) represents the defined area 106 (here, real world office 108) in the real world. Other defined areas 106 of the real world may also be represented by one or more virtual world parcels. As non-limiting examples, a defined area in the real world may comprise a volume, an enclosed space, a vehicle (as non-limiting examples, a car, truck, or airplane), a room, an office, an office suite, a conference room, a lobby of a building, and/or a building.

Figure 8A through 8B also illustrate that a defined area in the real world (e.g., office 108) and a virtual world parcel (e.g., virtual office 22) may be integrated such that an avatar 32 visiting the virtual world parcel and a real world entity 34 may collaboratively interact. As depicted in Figures 8A and 8B, a virtual camera 30 provides at least one image to a real world display 110 in real world office 108. A real world camera 112 may also provide at least one image the real world office 108 and/or real world entity 34 to a virtual world display 28 of virtual world model 18. Accordingly, when virtual world avatar 32 visits the virtual hallway 24 outside the virtual office 22, virtual world avatar 32 may also be viewable in real world office 108 on a real world display 110 in the real world office 108.

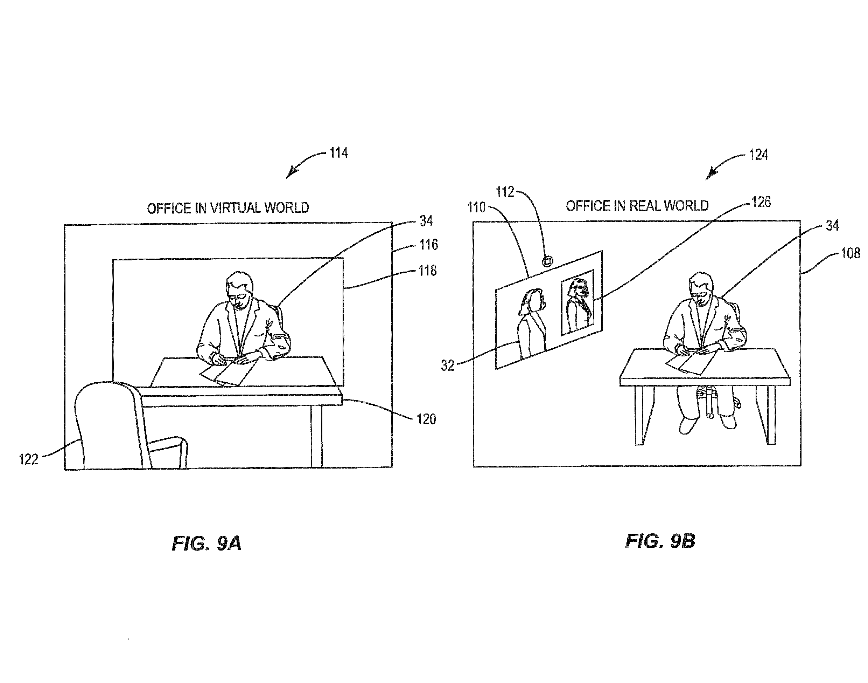

In Figure 8A, a virtual world metaphor (here, virtual door 26) represents that real world entity 34 is interruptible. Accordingly, avatar 32 may enter the virtual office 22 to attempt to communicate with real world entity 34. Figure 9A depicts an exemplary interior view 114 of an interior portion 116 of virtual office 22. Interior view 114 is an exemplary view that avatar 32 may see upon entering virtual office 22. The virtual office interior 116 may comprise a virtual table 120, a virtual chair 122, and a virtual display 118. The virtual chair 122 may be situated to allow the visiting avatar 32 to sit and view the virtual display 118.

Figure 9B depicts an interior view 124 of a real world office 108. Virtual display 118 may provide real time video and audio from a camera 112 of the real world office 108 (Figure 9B). The interior 116 of the virtual office 22 may also be viewable from the real world display 110 of the real world office 108. In this regard, as a non-limiting example, a virtual camera (not shown) may transmit video and/or audio of avatar 32 for presentation on the real world display 110 in the real world office 108. Real time video 126 of virtual world participant 42A (associated with avatar 32) may also be transmitted to the real world display 110 of the real world office 108. In this manner, one or more avatars 32 located in virtual parcel (e.g., virtual office 22 and/or virtual office interior 116) representing a defined area in the real world (e.g., real world office 108) may collaboratively interact with one or more real world entities 34 in the represented defined area in the real world (e.g., real world office 108).

Virtual world parcels may be provided to represent other real world areas. Figures 10A and 10B depict a virtual cubicle 128 representing a real world cubicle 130. Virtual cubicle 128 may comprise a virtual window 134, a virtual camera 136, a virtual cubicle entrance 132, a virtual whiteboard 140, and a virtual chair 138. Real world cubicle 130 may comprise a real display 144, a real camera 146, a real cubicle entrance 142, a real whiteboard 148, and a real chair 150. The virtual window 134 of the virtual cubicle 128 may represent an availability state (e.g., a presence and/or interruptibility state). In this regard, as a non-limiting example, virtual window 134 may represent the availability state of a real world entity 34 who is an occupant of the real world cubicle 130. With continuing reference to Figures 10A and 10B, a visiting avatar 32 (not shown) visiting virtual cubicle 128 may be permitted to interact with a real world entity 34 occupying or otherwise associated with the real world cubicle 130. In this regard, virtual camera 136 may provide at least one image of a visiting avatar 32 to a display 144 of the real world cubicle 130. Display 144 may be a display positioned on an interior surface of the real world cubicle 130 allowing a real world entity 34 sitting in the chair 150 to view the visiting avatar 32 on the display 144. Camera 146 may also provide at least one image (e.g., still pictures or real-time audio and/or video) of a real world entity 34 occupying or otherwise associated with real world cubicle 130 to virtual window 134 of virtual world model 18 in the virtual world.

In one embodiment, a virtual whiteboard 140 is provided in the virtual cubicle 128. Virtual whiteboard 140 represents a digital whiteboard 148 in the real world. A visiting avatar 32 may write on or otherwise provide a message on virtual whiteboard 140. Any messages written on or otherwise provided on virtual whiteboard 140 will display on the digital whiteboard 148 of the real world cubicle 130. Any messages written on or otherwise provided by a real world entity 34 on the digital whiteboard 148 of the real world cubicle 130 may also be displayed on the virtual whiteboard 140 of the virtual cubicle 128.

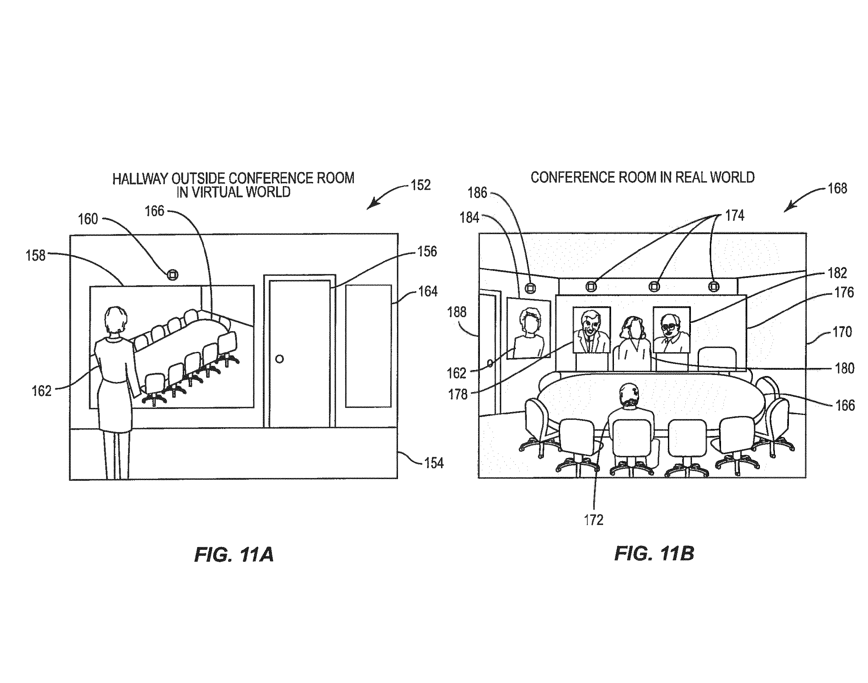

Figure 11A depicts an avatar view 152 of a rendered virtual world model 18. The virtual world model 18 depicted in Figure 11A comprises a virtual hallway 154, a virtual door 156, a virtual window 158, a virtual camera 160, a viewing avatar 162, and a conference room reservation interface 164.

A real world entity may comprise a defined volume in the real world. In one embodiment, a real world entity may comprise a room, such as real world conference room 170 (Figure 11B). As non-limiting examples, the defined volume in the real world may comprise a room, a conference room, an office, an office suite, a vehicle (as non-limiting examples, a car, truck, or airplane), a building lobby, and/or building.

In one embodiment, the real world entity may comprise a real world conference room 170 (Figure 11B). In this regard, virtual door 156 may be an availability metaphor for real world conference room 170 (Figure 11B). As such, virtual door 156 may represent the availability of the real world conference room 170 to viewing avatar 162. In one embodiment, an open state of virtual door 156 represents that avatar 162 may join the conference. In this embodiment, a closed state of virtual door 156 represents that avatar 162 is not permitted to join the conference. As a non-limiting example, avatar 162 may be permitted to join the conference if she is an invited attendee of a meeting scheduled for real world conference room 170. Alternatively, avatar 162 may be permitted to join the conference if a meeting scheduled for real world conference room 170 has an open attendees list. If the scheduled meeting has an open attendees list, any avatar 32 that is permitted to enter virtual hallway 154 may be permitted to enter virtual door 156 to join the conference. Alternatively, avatar 162 may be permitted to join the conference if there is no meeting currently scheduled for real world conference room 170.

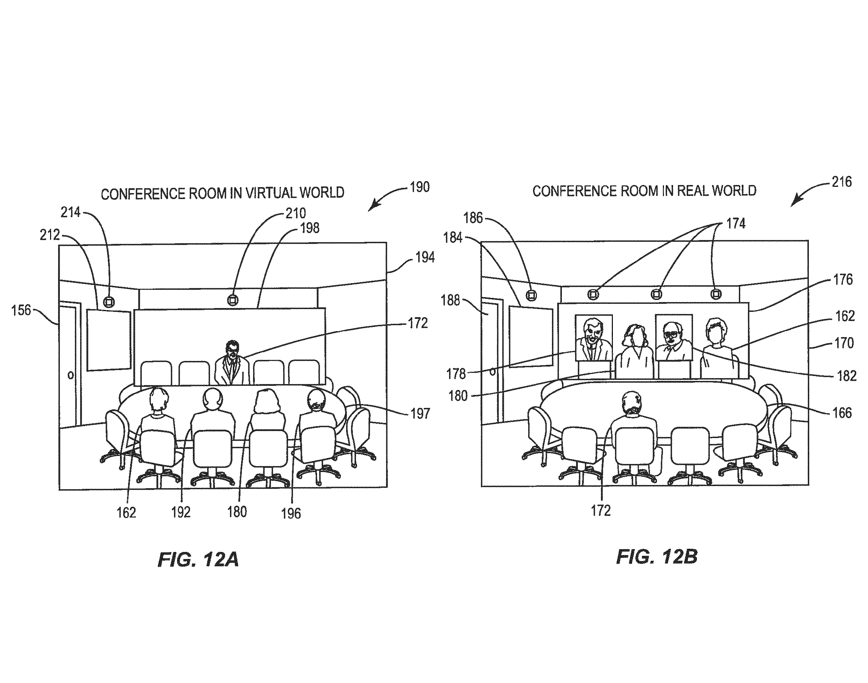

Virtual window 158 may also provide an availability metaphor (e.g., a presence metaphor) for a real world room, such as real world conference room 170. As a non-limiting example, virtual window 158 may display at least one image of the interior of the real world conference room 170. In one embodiment, the at least one image of the interior of the real world conference room 170 that is displayed on virtual window 158 in virtual hallway 154 may be captured at 10 second intervals, 20 second intervals, 30 second intervals, 1 minute intervals, 2 minute intervals, or 5 minute intervals. Other time intervals may also be used. Providing such periodic still images may allow attendees of a conference (such as attending real world entity 172 or virtual attendees represented by avatars 162, 192, 180, 196 (Figure 12A)) to perceive a greater sense of privacy than providing camera video from the camera in or through the virtual window 158. This may allow certain embodiments disclosed herein to more easily achieve user acceptance from meeting attendees. However, camera video of real world conference room 170 may also be provided in or through virtual window 158.

Figure 11B depicts a view 168 of a real world conference room 170. Real world conference room 170 may be comprised of one or more conference room table 166, a door 188, and chairs. Real world conference room 170 may also be comprised of display 176 for displaying a corresponding virtual conference room 194 (Figure 12A). One or more avatars 180 attending in the virtual conference room 194 (Figures 12A) may be displayed in the virtual conference room 194 on the display 176. At least one image of virtual world participants 42 (such as at least one image 178 and 182) may also be displayed on the display 176. The at least one image 178, 182 of a virtual world participant 42 may be real time video of the corresponding virtual world participant 42. The at least one image 178, 182 of a virtual world participant 42 may be provided in front of or in lieu of an avatar 192, 196 (Figure 12A) for virtual world participant 42 on the display 176.

Real world conference room 170 may also be comprised of cameras 174 for displaying the interior of the real world conference room 170 on a virtual display 198 in a virtual conference room 194 (Figure 12A). Real world conference room 170 may also be comprised of a camera 186 for displaying the interior of real world conference room 170 to the virtual window 158 in the virtual hallway 154 (Figure 11A). Real world conference room 170 may also be comprised of a display 184 for displaying avatars (such as avatar 162) looking into the virtual window 158 representing real world conference room 170.

Figure 12A depicts an avatar view 190 of a virtual conference room 194, after avatar 162 has been allowed entry into virtual door 156. Virtual conference room 194 is the virtual conference room 194 depicted on the display 176 of the real world conference room 170 in Figure 11B. Virtual conference room 194 is comprised of a virtual door 156, a virtual world table 197, and a virtual display 198 displaying the interior of the real world conference room 170 (Figure 11B). In this embodiment, real world entity 172 in the real world conference room 170 is viewable in the virtual world display 198 displaying the interior of the real world conference room 170 (Figure 11B). Virtual conference room 194 is also comprised of a virtual camera 210 for displaying the interior of virtual conference room 194 to a display 176 in the real world conference room 170 (Figure 11B). Virtual conference room 194 is also comprised of a virtual window 212 for displaying any avatars (e.g., avatar 162 in Figure 11A) waiting in the virtual hallway 154 outside the virtual conference room 194. Virtual conference room 194 is also comprised of a virtual camera 214. Virtual camera 214 may be used for displaying the interior of virtual conference room 194 to the virtual display 158 of the virtual hallway 154. Rendered view 190 also displays four avatars (162, 180, 192, and 196) present in virtual conference room 194.

Figure 12B depicts a view 216 of real world conference room 170, after avatar 162 has been allowed entry into virtual door 156. After entering virtual conference room 194, avatar 162 is shown seated in virtual conference room 194 on the display 176 in the real world conference room 170.

Referring back to Figure 11B, a virtual world model 18 may provide a conference room reservation interface 164 for reserving a real world conference room 170 and a virtual conference room 194 representing the real world conference room 170. In one embodiment, avatar 162 may manipulate a user interface conference room reservation interface 164 to reserve a defined volume in the real world (e.g., real world conference room 170). In response to the user interface manipulation of the user interface of the conference room reservation interface 164, conference room reservation interface 164 may transmit a request to virtual world server 38 to reserve a defined volume in the real world (e.g., real world conference room 170). In response to the request, virtual world server 38 may reserve the defined volume in the virtual world (e.g., virtual conference room 194) and also reserve the defined area in the real world (real world conference room 170).

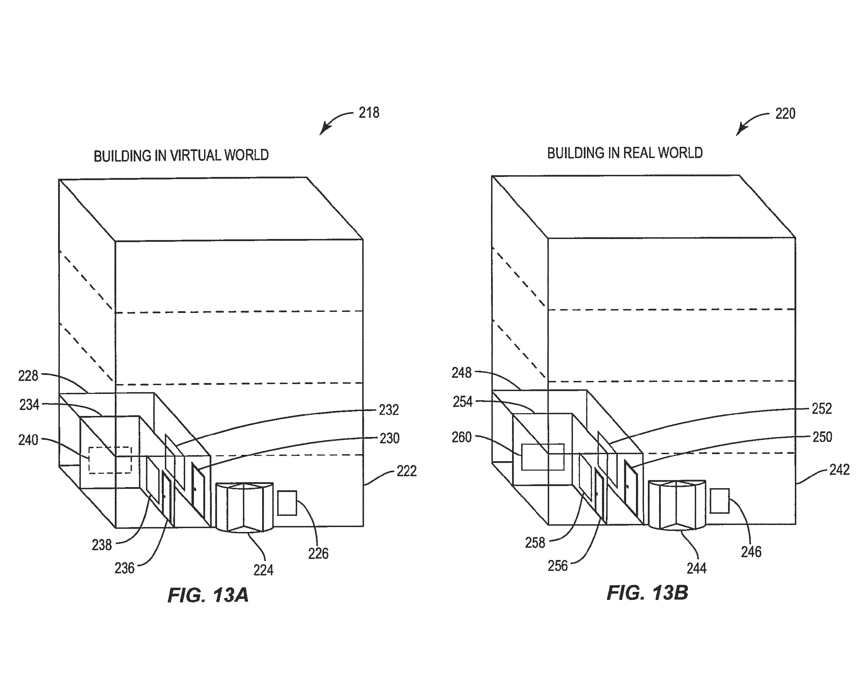

Referring now to Figures 13A and 13B, a virtual building 218 representing a real world building 220 may also be provided. Virtual building 218 may comprise a virtual building entrance 224 (e.g., a revolving door) and a virtual window 226. Virtual building entrance 224 may be an availability metaphor. In this regard, a visiting avatar 32 visiting the exterior of virtual building 218 may be provided a virtual world model 18 with the virtual building entrance 224 indicating that the building is available or not available to the visiting avatar 32.

In one embodiment, the virtual building entrance 224 is provided as a spinning revolving door if the corresponding real world building 220 is available to the visiting avatar 32. In this embodiment, the virtual building entrance 224 is provided as a stationary revolving door if real world building 220 is not available to the visiting avatar 32. In another embodiment, virtual building entrance 224 is provided as an open door if the real world building 220 is available to the visiting avatar 32. In this embodiment, virtual building entrance 224 is provided as a closed door if real world building 220 is not available to the visiting avatar 32. The virtual world server 38 may determine the availability of the real world building 220 to the visiting avatar 32 based on one or more availability rules. In one embodiment, virtual building entrance 224 may be provided as open and available to the visiting avatar 32 if the virtual world participant 42 associated with the visiting avatar 32 is an employee or authorized guest of a company having an office in the real world building 220. An interior display 246 of the real world building 220 may display avatars 32 visiting the exterior of the virtual building 218 on the interior display 246 inside the real world building 220.

In one embodiment, virtual window 226 may be an availability metaphor (for example, a presence metaphor). In this embodiment, virtual window 226 may represent whether any occupants of real world building 220 are present in the real world building 220. Virtual building 218 may comprise a virtual floor 222 representing a corresponding real world floor 242 of a real building 220. Each virtual floor 222 may comprise one or more virtual suites 228 representing real world suites 248 and/or virtual rooms 234 representing real world rooms 254.

Virtual building 218 may comprise a virtual suite 228, having a virtual door 230 and a virtual window 232. In one embodiment, virtual suite door 230 may be an availability metaphor. In this regard, a visiting avatar who was able to enter the building may view the state of the virtual suite door 230. Virtual suite door 230 may be provided as an open door if a corresponding real world suite 248 is available to the visiting avatar 32. Virtual suite door 230 may be provided as a closed door if the corresponding real world suite 248 is not available to the visiting avatar 32. Virtual world server 38 may determine the availability of the real world suite 248 to the visiting avatar 32 based on one or more availability rules. In one embodiment, virtual suite door 230 may be provided as open and available to the visiting avatar 32 if the virtual world participant 42 associated with the visiting avatar 32 is an employee or authorized guest of a company occupying the real world suite 248.

In one embodiment, virtual suite window 232 may also be an availability metaphor. Virtual suite window 232 may represent whether any occupants of the real world suite 248 are present in the real world suite 248. An interior display 252 of the real world suite 248 may display avatars 32 visiting the exterior of the virtual suite 228 inside the real world suite 248.

Virtual suite 228 and/or virtual building 218 may also comprise a virtual room 234 (such as a virtual office 22, 108) and/or virtual cubicles 128 (not shown). Virtual room 234 may comprise a virtual door 236, a virtual window 238, and/or a virtual whiteboard 240 (such as a virtual whiteboard 140 (Figure 10A). In one embodiment, a visiting avatar 32 who was able to enter the virtual suite 228 may view the state of the virtual door 236 of virtual room 234. Virtual door 236 may be an availability metaphor. In this regard, virtual door 236 may be provided as an open door if a corresponding real world room 254 is available to the visiting avatar 32. Virtual door 236 may be provided as a closed door if the corresponding real world room 254 is not available to the visiting avatar 32. Virtual world server 38 may determine the availability depicted by the virtual door 236 based on one or more availability rules. In one embodiment, the availability rules may be availability rules of an occupant of the real world room 254.

In one embodiment, virtual room window 238 may also be an availability metaphor. Virtual room window 238 may represent whether one or more occupants of the real world room 254 are present in the real world room 254. An interior display 258 of the real world room 254 may display avatars 32 visiting the exterior of the virtual room 234 inside the real world room 254.

A virtual whiteboard 240 may be provided in or outside the virtual room 234. Virtual whiteboard 240 represents a digital whiteboard 260 in the real world. A visiting avatar 32 may write on or otherwise provide a message on virtual whiteboard 240. Any messages written on or otherwise provided on virtual whiteboard 240 will display on the digital whiteboard 260 of the real world room 254. Any messages written on or otherwise provided by a real world entity 34 on the digital whiteboard 260 of the real world room 254 may also be displayed on the virtual whiteboard 240 of the virtual room 234.

Virtual doors (e.g., virtual building entrance 224, virtual suite door 230, and virtual room door 236) which act as availability metaphors may or may not appear to be a same type of door as a corresponding real world door (e.g., real world building entrance 244, real world suite door 250, and real world room door 256) of the real world building 220.

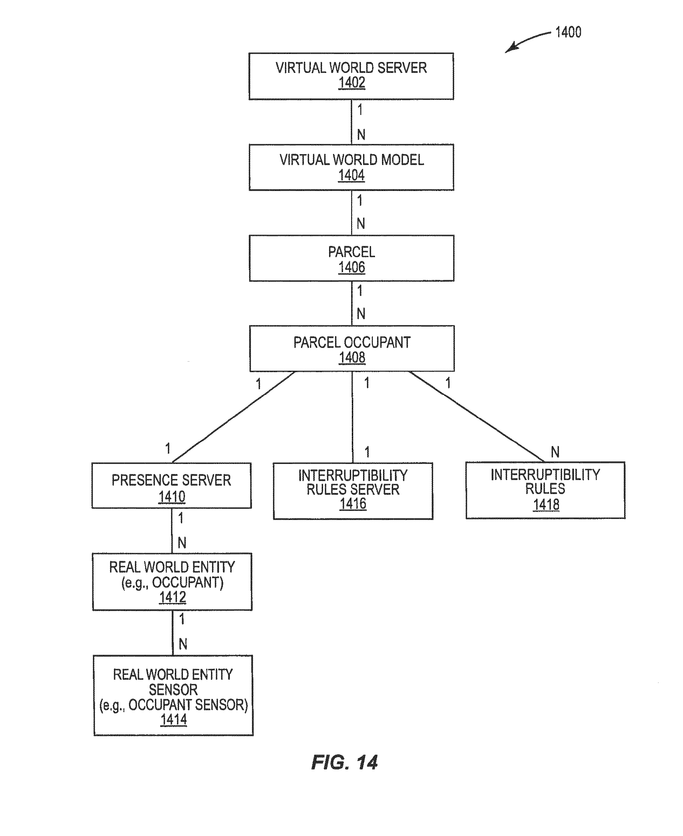

Figure 14 illustrates an exemplary data structure 1400 for storage and retrieval of data for a virtual world server 38. The data structure 1400 may or may not also be provided for a virtual world participant device 40. The data structure 1400 comprises a virtual world server record 1402 which may comprise information about the virtual world server 38, including the network address of the virtual world server 38. At least one virtual world model record 1404 may be associated with the virtual world server record 1402. At least one parcel record 1406 may be associated with each virtual world model record 1404. Each parcel record 1406 may comprise information about a virtual world parcel. As non-limiting examples, the parcel record 1406 may provide information about the dimensions and location of the virtual world parcel in the virtual world. Parcel record 1406 may also comprise a list of availability metaphors (for example, one or more presence metaphors and/or one or more availability metaphors, as non-limiting examples) which are located within the virtual world parcel associated with parcel record 1406. Each parcel record 1406 may also be associated with at least one parcel occupant record 1408. A parcel occupant record 1408 indicates occupant information about the virtual world parcel. As a non-limiting example, a parcel occupant record 1408 may comprise information about a real world occupant of a defined area in the real world represented by the parcel associated with the parcel record 1406.

Each parcel occupant record 1408 may be associated with a presence server record 1410 comprising information about the presence server for the occupant associated with the parcel occupant record 1408. When an availability metaphor of a parcel corresponding to a parcel record 1406 needs to be populated with availability information, information in the parcel occupant record 1408 and presence server record 1410 may be used to contact a presence server record 1410 to receive the desired availability information for a parcel occupant associated by the parcel occupant record 1408. Presence server record 1410 may comprise addressing information and/or authorization information to obtain availability information about the parcel occupant from the presence server.

A presence server record 1410 may be associated with at least one real world entity record 1412. Real world entity record 1412 comprises information about a real world entity for whom presence information is maintained on the presence server associated with presence server record 1410. The real world entity associated with real world entity record 1412 may or may not be an occupant. As a non-limiting example, a real world entity may be present on a device, but have not associated defined area in the real world where presence information is tracked.

Each real world entity record 1412 may be associated with at least one real world entity sensor 1414 for sensing the presence and/or interruptibility of the corresponding real world entity 34. In one embodiment, a real world entity sensor may be an occupant sensor for sensing whether the real world entity 34 is present at a defined area in the real world.

Parcel occupant record 1408 may also be associated with an interruptibility rules server record 1416. The interruptibility rules server record 1416 may contain addressing and/or authorization information for obtaining interruptibility rules from an interruptibility server.

Parcel occupant record 1408 may also be associated with at least one interruptibility rules record 1418. Each interruptibility rules record 1418 may comprise interruptibility rules for determining the availability of a parcel occupant associated with the parcel occupant record 1408. The interruptibility rules may be based on real world entity sensor information associated with real world entity sensor record 1414 or other information such as calendar information of the parcel occupant associated with the parcel occupant record 1408.

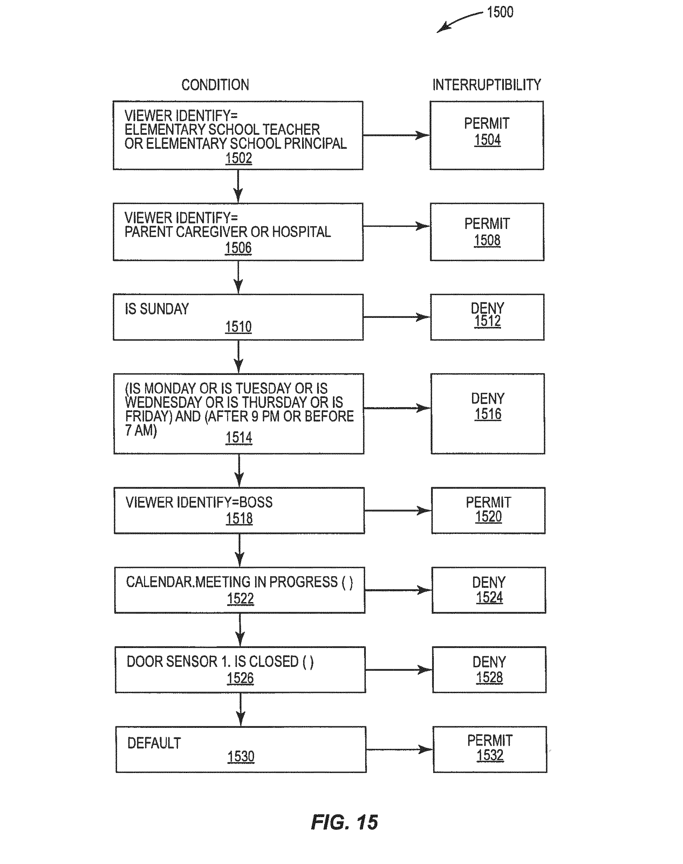

Determining the availability state of a real world entity 34 in the real world may comprise determining the availability state of the real world entity 34 based on availability rules for the real world entity 34. The availability rules may comprise interruptibility rules. In this regard, Figure 15 illustrates an exemplary interruptibility rule set 1500 of a real world entity 34. Each rule of the exemplary interruptibility rule set 1500 may be comprised of a condition and a corresponding interruptibility action. Conditions 1502, 1506, 1510, 1514, 1518, 1522, 1526, and 1530 are provided as non-limiting condition examples. Interruptibility actions 1504, 1508, 1512, 1516, 1520, 1524, 1528, and 1532 are provided as non-limiting interruptibility actions. Evaluation of the interruptibility rule set 1500 may begin at a first condition 1502. If an evaluated condition (e.g., 1502) is satisfied, then the corresponding interruptibility action (e.g., 1504) occurs. If an evaluated condition is not satisfied, then evaluation continues to a next condition (e.g., condition 1506). Evaluation of the conditions of the rule set continues until a condition (e.g., condition 1502, 1506, 1510, 1514, 1518, 1522, and 1526) is satisfied or alternatively until a default condition (e.g., condition 1530) is reached. Upon reaching a default condition (e.g., condition 1530), the corresponding interruptibility action occurs.

Evaluation of the exemplary interruptibility rule set 1500 may proceed as follows. If an identity of a viewer (e.g., a viewing avatar 32) is an elementary school teacher or elementary school principal (condition 1502), then interruptibility is permitted (1504). Otherwise, if an identity of a viewer (e.g., a viewing avatar 32) is a parent caregiver or hospital (1506), then interruptibility is permitted (1508). Otherwise, if the current day is a Sunday (1510), interruptibility is denied (1512). Otherwise, if the current day is a Monday, Tuesday, Wednesday, Thursday, or Friday, and the current time is after 9pm or before 7am (1514) then interruptibility is denied (1516). Otherwise, if an identity of a viewer (e.g., a viewing avatar 32) is a boss (e.g., an employer or manager) (1518), then interruptibility is permitted (1520). Otherwise, if the calendar of real world entity 34 indicates that a meeting is in progress (1522), then interruptibility is denied (1524). Otherwise, if a first door sensor associated with the real world entity 34 is closed (e.g., an office door of the real world entity 34) (1526), then interruptibility is denied (1528). Otherwise, the default condition applies (1530), and interruptibility is permitted (1532). The above provided conditions and interruptibility actions are exemplary. One of skill in the art will appreciate other conditions and/or interruptibility actions that may be used in accordance with this disclosure.

Similar rules sets could be provided for determining availability and/or presence of a real world entity 34 in accordance with this disclosure. In such cases the interruptibility action would instead be an availability action and/or presence action.

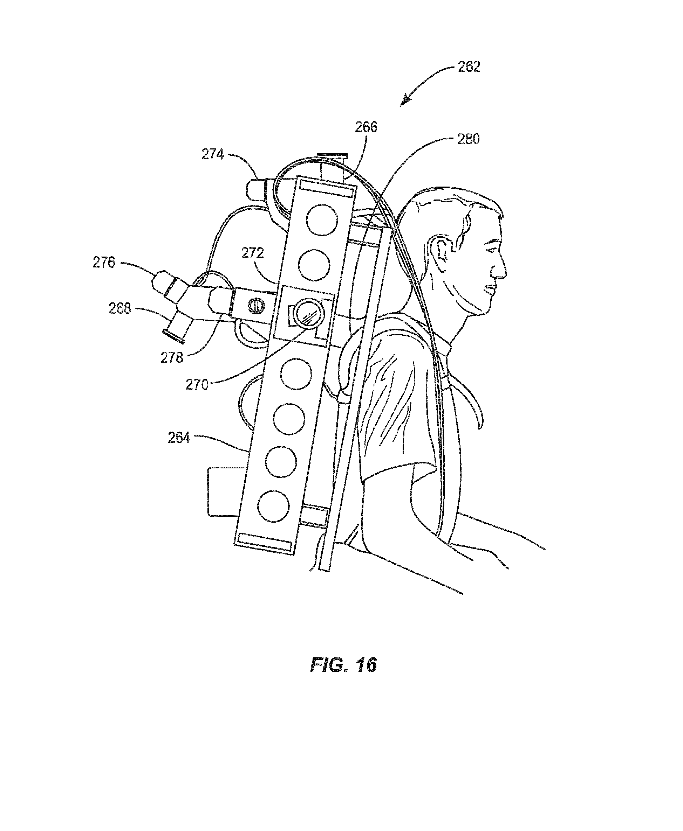

In accordance with this disclosure, virtual world models 18, 20 may represent real world locations in the real world. As non-limiting examples, such represented locations may comprise a room, an office, an office suite, a conference room, a vehicle (as non-limiting examples, a car, truck, or airplane), a lobby of a building, a building, and/or other volumes or enclosed spaces in the real world. Figure 16 illustrates an exemplary apparatus for collecting virtual world model information for providing such virtual world models 18, 20. In this embodiment, a backpack 262 is provided. The backpack 262 comprises a frame 264. Communicating with the frame 264 is a shoulder harness 280. The shoulder harness 280 may allow the backpack 262 to be carried by a person. Numerous devices for capturing information to be used for generating a virtual world model 18, 20 may be mounted on or within the frame 264. In this regard, the backpack 262 may comprise a plurality of visible light cameras 266, 268, 270, 272. Visible light camera 266 captures images above the backpack 262. Visible light camera 268 captures images below the backpack 262. Visible light camera 270 captures images to the right side of the backpack 262. Visible light camera 272 captures images to the left of the backpack 262. Backpack 262 may also comprise a plurality of scanning lasers (e.g., scanning lasers 274, 276, 278) for determining distances of surfaces in relation to the position of the backpack 262. The backpack 262 may further comprise one or more location sensing devices (e.g., a GPS sensor) (not shown). Backpack 262 may further comprise an inertial management unit (not shown) which may be used as an aid to determine the position of the backpack 262, for example using dead reckoning, especially when other location sensing devices are unable to obtain a sufficient reference signal for determining the location of the backpack 262. An exemplary backpack 262 is discussed in Timothy Liu, et al. "Indoor Localization and Visualization Using a Human-Operated Backpack System," available at http://www-video.eecs.berkeley.edu/papers/tliu/backpack_ipin.pdf, which is hereby incorporated by reference in its entirety.

Backpack 262 may be carried through the interior of a structure (e.g., a building) to generate a virtual world model 18, 20 representing the structure. One of skill in the art may appreciate that the virtual world model 18, 20 may provide a close approximation of the structure that may or may not be photo-realistic.

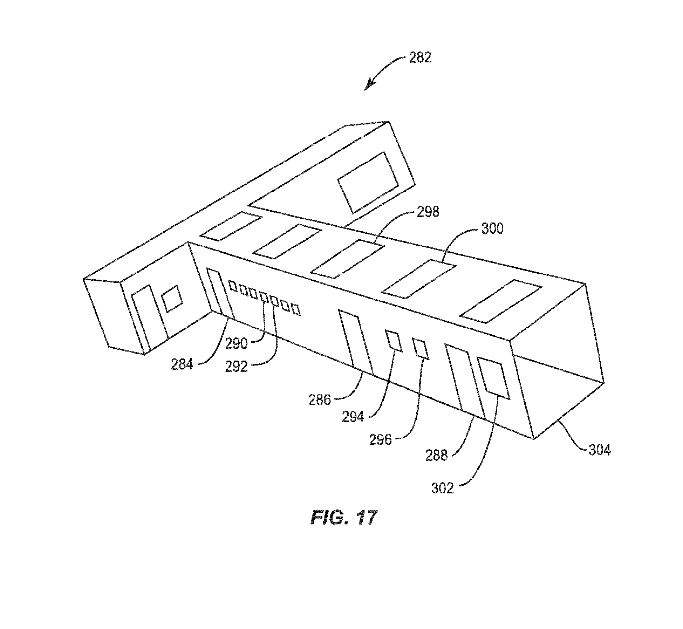

Using backpack 262, a virtual world model 18, 20 may be generated for use by a virtual world server 38. Figure 17 illustrates an exemplary virtual world model 282 which may be generated by carrying or otherwise moving backpack 262 through portions of two hallways of a building. In this regard, Figure 17 depicts an exterior view of a virtual world model 282 comprised of two intersecting hallways (e.g., virtual hallway 304). Virtual hallway 304 is comprised of images of doors (e.g., doors 284, 286, 288), picture frames 290, 292, 294, 296, lights 298, 300, and a window 302.

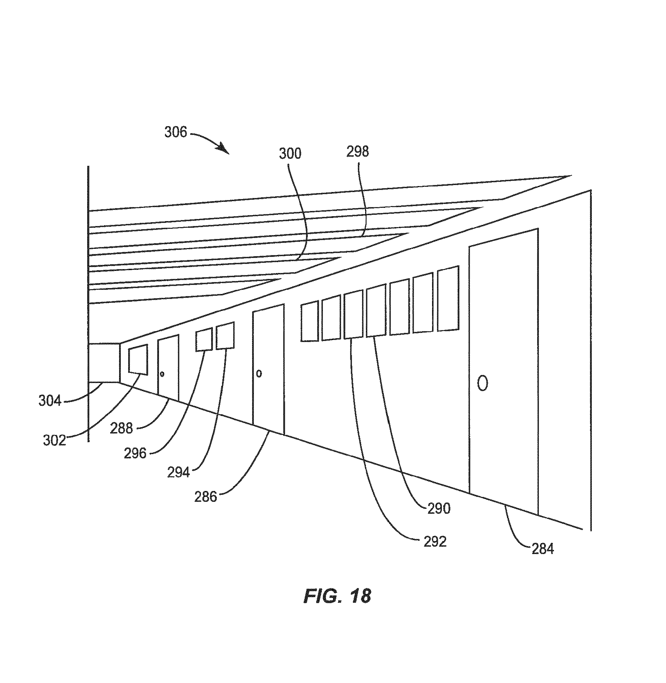

Figure 18 illustrates an interior view 306 of the virtual hallway 304 of Figure 17. In this regard, the images of doors (e.g., doors 284, 286, 288), picture frames 290, 292, 294, 296, lights 298, 300, window 302, and other portions of the virtual hallway 304 are also visible in the interior view 306.

Virtual world models generated by backpack 262 do not contain availability metaphors. However, in accordance with this disclosure, virtual world models generated by backpack 262 may be augmented so as to provide availability metaphors at certain locations within the virtual world model. As a non-limiting example, in accordance with this disclosure, virtual doors and/or virtual windows or other aspects of the virtual world model may be provided at the location of the images of the doors, windows, and or other aspects of the virtual world model to provide availability metaphors at those locations of the virtual world model.

Backpack 262 provides one non-limiting example of a device which may assist the providing of a virtual world model (such as a virtual world model 18, 20) representing a real world location in the real world. One of skill in the art will appreciate other such devices and systems, which in accordance with this disclosure, may assist the providing of a virtual world model representing a real world location in the real world. Such virtual world models may be augmented to provide availability metaphors, such as those herein discussed, at certain locations of those virtual world models to represent the availability (e.g., presence and/or interruptibility of one or more real world entities 34) in the real world.

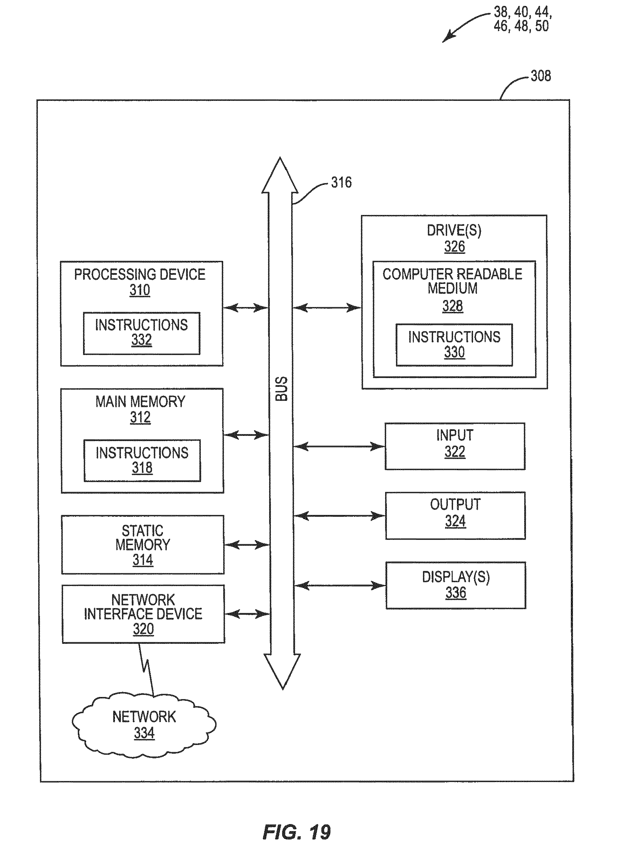

Figure 19 provides a schematic diagram representation of virtual world server 38 in the exemplary form of an exemplary computer system 308 adapted to execute instructions from an exemplary computer-readable medium to perform the functions described herein. In this regard, the virtual world server 38 may comprise the computer system 308 within which a set of instructions for causing the virtual world server 38 to perform any one or more of the methodologies discussed herein may be executed. The virtual world server 38 may be connected (e.g., networked) to other machines in a local area network (LAN), an intranet, an extranet, or the Internet. The virtual world server 38 may operate in a client-server network environment, or as a peer machine in a peer-to-peer (or distributed) network environment. While only a single virtual world server 38 is illustrated, the terms "controller" and "server" shall also be taken to include any collection of machines that individually or jointly execute a set (or multiple sets) of instructions to perform any one or more of the methodologies discussed herein. The virtual world server 38 may be a server, a personal computer, a desktop computer, a laptop computer, a personal digital assistant (PDA), a computing pad, a mobile device, or any other device and may represent, for example, a server or a user's computer, as non-limiting examples.

The exemplary computer system 308 includes a processing device or processor 310, a main memory 312 (e.g., read-only memory (ROM), flash memory, dynamic random access memory (DRAM) such as synchronous DRAM (SDRAM), etc.), and a static memory 314 (e.g., flash memory, static random access memory (SRAM), etc.), which may communicate with each other via a bus 316. Alternatively, the processing device 310 may be connected to the main memory 312 and/or static memory 314 directly or via some other connectivity means.

The processing device 310 represents one or more processing devices such as a microprocessor, central processing unit, or the like. More particularly, the processing device 310 may be a complex instruction set computing (CISC) microprocessor, a reduced instruction set computing (RISC) microprocessor, a very long instruction word (VLIW) microprocessor, a processor implementing other instruction sets, or processors implementing a combination of instruction sets. The processing device 310 is configured to execute processing logic in instructions 318 and/or cached instructions 332 for performing the operations and steps discussed herein.

The computer system 308 may further include a communications interface in the form of a network interface device 320. It also may or may not include an input 322 to receive input and selections to be communicated to the computer system 308 when executing instructions. It also may or may not include an output 324, including but not limited to display(s) 336, a video display unit (e.g., a liquid crystal display (LCD) or a cathode ray tube (CRT)), an alphanumeric input device (e.g., a keyboard), a cursor control device (e.g., a mouse), a touch screen device (e.g., a tablet input device or screen), and/or at least one virtual reality glove.

The computer system 308 may or may not include a data storage device that includes using drive(s) 326 to store functions herein described in computer-readable medium 328 on which is stored one or more sets of instructions 330 (e.g., software) embodying any one or more of the methodologies or functions described herein. The functions can include the method 200 or other functions of the virtual world server 38, as non-limiting examples. The instructions 332 may also reside, completely or at least partially, within the main memory 312 and/or within the processing device 310 during execution thereof by the computer system 308, the main memory 312 and the processing device 310 also constituting machine-accessible storage media. The instructions 312, 318, and/or 330 may further be transmitted or received over a network 334 via the network interface device 320. The network 334 can be an intra-network or an inter-network.

While the computer-readable medium 328 is shown in an exemplary embodiment to be a single medium, the term "machine-accessible storage medium" should be taken to include a single medium or multiple media (e.g., a centralized or distributed database, and/or associated caches and servers) that store the one or more sets of instructions. The term "machine-accessible storage medium" shall also be taken to include any medium that is capable of storing, encoding or carrying a set of instructions for execution by the machine and that cause the machine to perform any one or more of the methodologies of the embodiments disclosed herein. The term "machine-accessible storage medium" shall accordingly be taken to include, but not be limited to, solid-state memories, optical and magnetic media, and carrier wave signals.

As also depicted in Figure 19, virtual world participant device 40, availability server 44, calendar server 46, real world entity device 48, and a real world entity sensor 50 may also each be provided in the form of an exemplary computer system 308.

The devices, systems, methods, and computer-readable mediums providing at least one availability metaphor of at least one real world entity in a virtual world according to embodiments disclosed herein may be provided in or integrated into any processor-based device. Examples, without limitation, include a set top box, an entertainment unit, a navigation device, a communications device, a fixed location data unit, a mobile location data unit, a mobile phone, a cellular phone, an internet phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

Those of skill in the art would further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The arbiters, master devices, and slave devices described herein may be employed in any circuit, hardware component, integrated circuit (IC), or IC chip, as non-limiting examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a processor, a digital signal processor (DSP), an Application Specific Integrated Circuit (ASIC), an field programmable gate array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, as non-limiting examples, in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an Application Specific Integrated Circuit (ASIC). The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. It is to be understood that the operational steps illustrated in the flow chart diagrams may be subject to numerous different modifications as will be readily apparent to one of skill in the art. Those of skill in the art would also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein, but is to be accorded the widest scope consistent with the principles and novel features disclosed herein.

## Claims

1. A computer-implemented method of providing at least one availability metaphor of at least one real world entity in a virtual world, comprising:
receiving a request to provide a virtual world model, the virtual world model comprising at least one availability metaphor representing at least one availability state of at least one real world entity;
determining, for each at least one availability metaphor, an availability state of a real world entity associated with the availability metaphor;
generating a modified instance of the virtual world model based on the determined at least one availability state of the at least one real world entity associated with the at least one availability metaphor, the modified instance of the virtual world model comprising the at least one availability metaphor, each at least one availability metaphor representing the availability state of the associated real world entity; and
transmitting the modified instance of the virtual world model for rendering.

2. The method of claim 1, wherein the real world entity is an occupant of a defined area in a real world; and
wherein the virtual world model comprises at least one virtual world parcel representing the defined area in the real world.

3. The method of claim 1, wherein determining the availability state of the real world entity comprises determining a presence of the real world entity in a defined area in a real world.

4. The method of claim 1, wherein determining the availability state of the real world entity comprises determining a presence of the real world entity on a device in a real world.

5. The method of claim 1, wherein the at least one availability metaphor of the virtual world model comprises a virtual world door representing an interruptibility of the real world entity.

6. The method of claim 1, wherein determining the availability state of the real world entity comprises determining an interruptibility of the real world entity in a real world.

7. The method of claim 1, wherein the availability metaphor of the virtual world model comprises a virtual world window representing a presence of the real world entity in a real world.

8. The method of claim 1, further comprising rendering for display the modified instance of the virtual world model.

9. The method of claim 1, wherein determining the availability state of the real world entity comprises:
transmitting a request for availability information for the real world entity to an availability server; and
receiving the availability information for the real world entity from the availability server.

10. The method of claim 1, wherein the at least one availability state of the at least one real world entity comprises the availability state of the at least one real world entity for communications with at least one viewing entity viewing the rendered virtual world model.

11. The method of claim 1, further comprising receiving an identity of a viewing entity for whom the virtual world model is to be rendered.

12. The method of claim 1, further comprising:
receiving a second request to provide the virtual world model for a second viewing entity;
determining a second availability state of the real world entity based on an identity of the second viewing entity;
generating a second modified instance of the virtual world model based on the second availability state; and
transmitting the second modified instance of the virtual world model for rendering for the second viewing entity,
wherein the modified instance of the virtual world model and the second modified instance of the virtual world model are for concurrent rendering; and
wherein the modified instance of the virtual world model provides the real world entity as available and the second modified instance of the virtual world model provides the real world entity as not available.

13. The method of claim 1, wherein the real world entity comprises a defined volume in a real world.

14. The method of claim 13, further comprising receiving a request from a user interface in a virtual world to reserve the defined volume in the real world, and in response to receiving the request:
reserving a defined volume in the virtual world; and
reserving the corresponding defined volume in the real world.

15. An apparatus for providing at least one availability metaphor of at least one real world entity in a virtual world, comprising:
a communications interface adapted to interface with a network; and
a control system coupled to the communications interface and configured to:
receive a request to provide a virtual world model, the virtual world model comprising at least one availability metaphor representing at least one availability state of at least one real world entity;
determine, for each at least one availability metaphor, an availability state of a real world entity associated with the availability metaphor;
generate a modified instance of the virtual world model based on the determined at least one availability state of the at least one real world entity associated with the at least one availability metaphor, the modified instance of the virtual world model comprising the at least one availability metaphor, each at least one availability metaphor representing the availability state of the associated real world entity; and
transmit the modified instance of the virtual world model for rendering.
